# EUROPEAN PATENT APPLICATION

(11) **EP 4 644 434 A1**
(43) Date of publication of application: **05.11.2025**
(21) Application number: 23912230.2
(22) Date of filing: 27.12.2023
(51) Int. Cl.: C08F 10/14, C08F 4/64

(54) **3-METHYL-1-BUTENE-BASED POLYMER, MANUFACTURING METHOD THEREFOR, RESIN COMPOSITION, PELLET, AND MOLDED ITEM**

(30) Priority: 28.12.2022 JP 2022212746
(71) Applicant: Kuraray Co., Ltd., Kurashiki-shi, Okayama 710-0801 (JP)
(72) Inventor: MURATA, Yusuke, Kamisu-shi, Ibaraki 314-0197 (JP); INADA, Tsubasa, Tsukuba-shi, Ibaraki 305-0841 (JP); BUSICO, Vincenzo, 80126 Napoli (IT); CIPULLO, Roberta, 80131 Napoli (IT); ANTINUCCI, Giuseppe, 81037 Sessa Aurunca(CE) (IT); EHM, Christian, 80125 Napoli(NA) (IT); DI GIROLAMO, Rocco, 83035 Grottaminarda(AV) (IT); MINGIONE, Alessio, 81056 Sparanise(CE) (IT)
(74) Representative: D Young & Co LLP
(86) International application number: PCT/JP2023/046871
(87) International publication number: WO 2024/143452

(57) **Abstract**

Provide are a 3-methyl-1-butene-based polymer that has high crystallinity and can improve the mechanical strength of a molded item, a method for producing the same, and a resin composition, a pellet, and a molded item. The 3-methyl-1-butene-based polymer is a 3-methyl-1-butene-based polymer having a melting enthalpy, determined by differential scanning calorimetry (DSC), of 65 to 100 J/g.

## Description

### Technical Field

The present invention relates to a 3-methyl-1-butene-based polymer, a method for producing the same, a resin composition, a pellet, and a molded item.

### Background Art

Conventionally, many various α-olefin-based polymers have been produced. There are relatively few report examples of production of a 3-methyl-1-butene-based polymer that is known as a polyolefin having a high melting point among the polymers.

However, examples of documents that report the production of a 3-methyl-1-butene-based polymer include a document in which a 3-methyl-1-butene-based polymer is produced using a Ziegler-Natta catalyst (e.g., see PTL 1) and a document in which a 3-methyl-1-butene-based polymer is produced using a Metallocene catalyst (e.g., see PTL 2).

### Citation List

### Patent Literature

PTL 1:JP 61-272205 A
PTL 2:JP 2009-542874 T

### Summary of Invention

### Technical Problem

A 3-methyl-1-butene-based polymer has crystallinity that is more excellent as the melting enthalpy is higher, and therefore the mechanical strength, such as rigidity, of a molded item of the 3-methyl-1-butene-based polymer is improved. However, the melting enthalpy of a conventionally produced 3-methyl-1-butene-based polymer is at most 63 J/g, a 3-methyl-1-butene-based polymer having a higher melting enthalpy than this melting enthalpy is not known, and the production of such a 3-methyl-1-butene-based polymer has not been tried. Accordingly, there remains a need for further improvement in mechanical strength of the molded item of the 3-methyl-1-butene-based polymer.

An object of the present invention is to provide a 3-methyl-1-butene-based polymer that has high crystallinity and can improve the mechanical strength of a molded item, a method for producing the same, and a resin composition, a pellet, and a molded item.

### Solution to Problem

As a result of intensive studies to solve the above problems, the present inventors have found that the problems can be solved by the invention of the present application including the following embodiments.
[1] A 3-methyl-1-butene-based polymer, the polymer having a melting enthalpy, determined by differential scanning calorimetry (DSC), of 65 to 100 J/g.
[2] The 3-methyl-1-butene-based polymer according to [1], in which a melting point is 280 to 310°C.
[3] A 3-methyl-1-butene-based polymer not subjected to melting treatment, the polymer having a degree of crystallinity, determined by the following method, of 80 to 100%.
   (Method for calculating degree of crystallinity)
   A maximum peak intensity and an amorphous peak intensity are obtained from a profile obtained by an X-ray diffraction method, and the degree of crystallinity is calculated from the following formula; and herein, the maximum peak intensity is an intensity of a peak at a diffraction angle 2θ of a peak top of 17.2 to 17.3°, and the amorphous peak intensity is an intensity of a gap between a peak at a diffraction angle 20 of a peak top of 10.1 to 10.3° and a peak at a diffraction angle 2θ of a peak top of 11.4 to 11.6°. Degree of crystallinity (%) = 100(maximum peak intensity - amorphous peak intensity)/maximum peak intensity
[4] A 3-methyl-1-butene-based polymer subjected to melting treatment, the polymer having a degree of crystallinity, determined by the following method, of 95 to 100%.
   (Method for calculating degree of crystallinity)
   A maximum peak intensity and an amorphous peak intensity are obtained from a profile obtained by an X-ray diffraction method, and the degree of crystallinity is calculated from the following formula; and herein, the maximum peak intensity is an intensity of a peak at a diffraction angle 2θ of a peak top of 17.2 to 17.3°, and the amorphous peak intensity is an intensity of a gap between a peak at a diffraction angle 20 of a peak top of 10.1 to 10.3° and a peak at a diffraction angle 2θ of a peak top of 11.4 to 11.6°. Degree of crystallinity (%) = 100(maximum peak intensity - amorphous peak intensity)/maximum peak intensity
[5] The 3-methyl-1-butene-based polymer according to any one of [1] to [4], in which the polymer is a 3-methyl-1-butene homopolymer or a copolymer of 3-methyl-1-butene and ethylene or an α-olefin.
[6] The 3-methyl-1-butene-based polymer according to any one of [1] to [5], in which the α-olefin is an α-olefin having 3 to 20 carbon atoms.
[7] A resin composition containing the 3-methyl-1-butene-based polymer according to any one of [1] to [6].
[8] A pellet containing the 3-methyl-1-butene-based polymer according to any one of [1] to [6] or the resin composition according to [7].
[9] A molded item containing the 3-methyl-1-butene-based polymer according to any one of [1] to [6] or the resin composition according to [7].
[10] A method for producing the 3-methyl-1-butene-based polymer according to any one of [1] to [6], the method including: polymerizing 3-methyl-1-butene alone or copolymerizing 3-methyl-1-butene and ethylene or an α-olefin in the presence of a catalyst formed from a composition containing a ligand (1) represented by the following formula (I) or (II) and a metal compound (2) represented by a formula M(L)ₙ, in which M is titanium, hafnium, or zirconium; L is a component forming a covalent bond, a dative bond, or an ionic bond with the M; and n is an integer of 2 to 6. 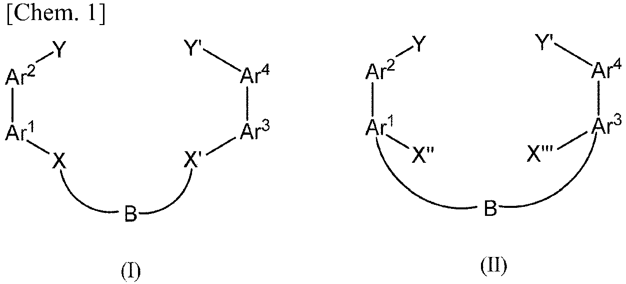 The ligand represented by the formula (I) or (II) has at least two hydrogen atoms to be removed by a binding reaction with a metal atom, the metal compound (2), or a base; Ar¹ to Ar⁴ are each independently a substituted or unsubstituted aryl group or a substituted or unsubstituted heteroaryl group; B is a cross-linking group having 1 to 50 atoms (provided that the number of hydrogen atoms is excluded); all X and X' are an oxygen atom; X" and X‴ are each independently a hydroxy group, a substituted or unsubstituted alkoxy group, or a substituted or unsubstituted aryloxy group; and Y and Y' are each independently a hydroxy group, a substituted or unsubstituted alkoxy group, or a substituted or unsubstituted aryloxy group.
[11] The method for producing a 3-methyl-1-butene-based polymer according to [10], in which the ligand (1) has the following structure. 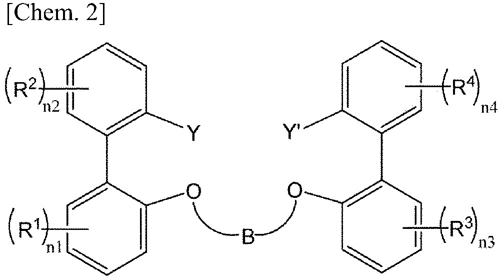 In the formulae, B, Y, and Y' are as defined above; R¹ to R⁴ are each independently a substituent selected from an alkyl group, an aryl group, a heteroaryl group, and a group obtained by combining these groups; and n1 to n4 are each independently an integer of 1 to 4.
[12] The method for producing a 3-methyl-1-butene-based polymer according to [10] or [11], in which the polymerizing or copolymerizing is further performed in the presence of an activating agent (3).
[13] The method for producing the 3-methyl-1-butene-based polymer according to any one of [10] to [12], in which a polymerization temperature is 10 to 180°C.

### Advantageous Effects of Invention

According to the present invention, a 3-methyl-1-butene-based polymer that has high crystallinity and can improve the mechanical intensity of a molded item and a method for producing the same, and a resin composition containing the 3-methyl-1-butene-based polymer, a pellet, and a molded item can be provided.

### Brief Description of Drawings

[Fig. 1] Fig. 1 is a profile obtained by measurement of a 3-methyl-1-butene-based polymer not subjected to melting treatment, obtained in Example 1 by an X-ray diffraction method.
[Fig. 2] Fig. 2 is a profile obtained by measurement of a 3-methyl-1-butene-based polymer subjected to melting treatment, obtained in Example 1 by an X-ray diffraction method.
[Fig. 3] Fig. 3 is a profile obtained by measurement of a 3-methyl-1-butene-based polymer not subjected to melting treatment, obtained in Example 4 by an X-ray diffraction method.
[Fig. 4] Fig. 4 is a profile obtained by measurement of a 3-methyl-1-butene-based polymer subjected to melting treatment, obtained in Example 4 by an X-ray diffraction method.
[Fig. 5] Fig. 5 is a profile obtained by measurement of a 3-methyl-1-butene-based polymer not subjected to melting treatment, obtained in Comparative Example 4 by an X-ray diffraction method.

### Description of Embodiments

Hereinafter, the present invention will be described on the basis of an example of embodiments of the present invention. However, the embodiments described below are illustrative for embodying the technological thought of the present invention, and the present invention is not limited to the following descriptions.

In the present description, preferred modes of the embodiments are shown, but a combination of two or more of individual preferred modes is also a preferred mode. When there are several numerical ranges for the matters indicated in a numerical range, a lower limit and an upper limit thereof can be selectively combined to form a preferred form.

In the description, when there is a description pertaining to a numerical range of "XX to YY", the description means "XX or more and YY or less".

In the description, Me means a methyl group, Et means an ethyl group, ⁱPr means an isopropyl group, Ph means a phenyl group, and Bz means a benzyl group. THF means tetrahydrofuran.

In the description, the term "polymerization activity" means the activity of a catalyst that directly or indirectly promotes homopolymerization of 3-methyl-1-butene or copolymerization of 3-methyl-1-butene and ethylene or an α-olefin to produce a 3-methyl-1-butene-based polymer. Polymerization activity is indicated by the mass of a polymer produced by a polymerization reaction with respect to the mass of a catalyst used, and specifically calculated by a method described in Examples.

### [3-Methyl-1-butene-based Polymer]

A 3-methyl-1-butene-based polymer of an embodiment has a melting enthalpy, determined by differential scanning calorimetry (DSC), of 65 to 100 J/g. A method for producing such a 3-methyl-1-butene-based polymer will be described below.

That the 3-methyl-1-butene-based polymer has a melting enthalpy of 65 to 100 J/g means that the crystallinity of the 3-methyl-1-butene-based polymer is very high, and therefore the mechanical strength, such as rigidity, of a molded item of the 3-methyl-1-butene-based polymer is improved. From the same viewpoint, the melting enthalpy of the 3-methyl-1-butene-based polymer is preferably 67 to 100 J/g, more preferably 70 to 100 J/g, even more preferably 72 to 100 J/g, particularly preferably 74 to 100 J/g, and most preferably 77 to 100 J/g. The upper limit value of the melting enthalpy of the 3-methyl-1-butene-based polymer is not particularly limited, and may be 95 J/g or less, 90 J/g or less, 85 J/g or less, or 82 J/g or less.

In measurement of the melting enthalpy of the 3-methyl-1-butene-based polymer, differential scanning calorimetry (DSC) is utilized as described above. Measurement conditions of DSC are as described in Examples.

The 3-methyl-1-butene-based polymer of the present embodiment has a high melting point, and specifically, the melting point is preferably 280 to 310°C, more preferably 285 to 310°C, even more preferably 290 to 310°C, and particularly preferably 295 to 310°C. The 3-methyl-1-butene-based polymer having a high melting point of the present embodiment has excellent heat resistance. The heat resistance of a 3-methyl-1-butene-based polymer having a melting point of 280°C or more is sufficient. Meanwhile, the processing temperature of a 3-methyl-1-butene-based polymer having a melting point of 310°C or less can be reduced, and therefore thermal degradation during processing is easily suppressed.

When a 3-methyl-1-butene-based polymer is produced by a production method described below, the 3-methyl-1-butene-based polymer having the aforementioned melting point can be obtained.

In measurement of the melting point, differential scanning calorimetry (DSC) is utilized. Measurement conditions of DSC are as described in Examples.

The 3-methyl-1-butene-based polymer of the present embodiment is a 3-methyl-1-butene homopolymer or a copolymer of 3-methyl-1-butene and ethylene or an α-olefin. The copolymer is not particularly limited, but from the viewpoint of the mechanical strength, such as rigidity, of a molded item, the content of a structural unit derived from 3-methyl-1-butene is preferably 50 mol% or more (including 100 mol%), the content of the structural unit derived from 3-methyl-1-butene is more preferably 80 mol% or more (including 100 mol%), and the content of the structural unit derived from 3-methyl-1-butene is even more preferably 90 mol% or more (including 100 mol%). From the viewpoint of the mechanical strength, such as rigidity, of a molded item, the 3-methyl-1-butene-based polymer is preferably the copolymer having a content of the structural unit derived from 3-methyl-1-butene of 50 mol% or more or the 3-methyl-1-butene homopolymer, and more preferably the 3-methyl-1-butene homopolymer.

The α-olefin is an α-olefin other than 3-methyl-1-butene, and preferably an α-olefin having 3 to 20 carbon atoms from the viewpoint of copolymerization properties. The α-olefin is more preferably an α-olefin having 3 to 16 carbon atoms, and even more preferably an α-olefin having 3 to 12 carbon atoms. The α-olefin may be linear or branched.

The copolymer may be a random copolymer, a block copolymer, or an alternating copolymer.

Examples of the α-olefin include propylene, 1-butene, 1-pentene, 1-hexene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, vinylcyclohexene, and vinylnorbornane.

The α-olefin may be used alone, or two or more kinds thereof may be used.

### [Method for Producing 3-Methyl-1-butene-based Polymer]

A method for producing a 3-methyl-1-butene-based polymer of an embodiment is not particularly limited, but from the viewpoint of producing the 3-methyl-1-butene-based polymer having the aforementioned features, the following method is effective.

That is, a method for producing a 3-methyl-1-butene-based polymer including: polymerizing 3-methyl-1-butene alone or copolymerizing 3-methyl-1-butene and ethylene or an α-olefin in the presence of a catalyst formed from a composition containing a ligand (1) represented by the following formula (I) or (II) and a metal compound (2) represented by a formula M(L)ₙ, in which M is titanium, hafnium, or zirconium; L is a component forming a covalent bond, a dative bond, or an ionic bond with the M; and n is an integer of 2 to 6, is effective.

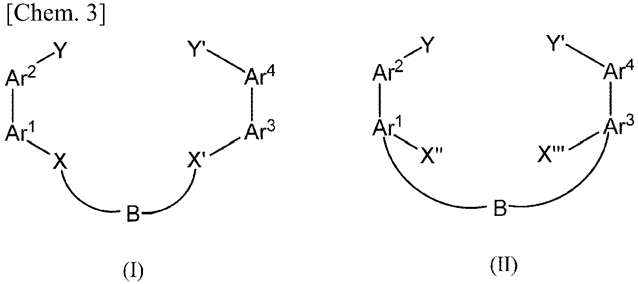

The ligand represented by the formula (I) or (II) has at least two hydrogen atoms to be removed by a binding reaction with a metal atom, the metal compound (2), or a base; Ar¹ to Ar⁴ are each independently a substituted or unsubstituted aryl group or a substituted or unsubstituted heteroaryl group; B is a cross-linking group having 1 to 50 atoms (provided that the number of hydrogen atoms is excluded). All X and X' are an oxygen atom. X" and X‴ are each independently a hydroxy group, a substituted or unsubstituted alkoxy group, a substituted or unsubstituted aryloxy group, or a substituted or unsubstituted aralkyloxy group. Y and Y' are each independently a hydroxy group, a substituted or unsubstituted alkoxy group, a substituted or unsubstituted aryloxy group, or a substituted or unsubstituted aralkyloxy group.

An α-olefin to be copolymerized with 3-methyl-1-butene is the same as the α-olefin described above.

A 3-methyl-1-butene-based polymer obtained by the production method of the present embodiment is the same as the 3-methyl-1-butene-based polymer described above.

### (Ligand (1))

In the ligand (1) represented by the formula (I) or (II), two hydrogen atoms to be removed by a binding reaction (complexation reaction) with a metal atom, the metal compound (2), or a base are present. In the embodiment, it is preferable that at least two of X, X', Y, and Y' or at least two of X', X‴, Y, and Y' have at least one hydrogen atom.

Examples of the metal atom are the same as the examples of the M. The metal compound (2) will be described below. Examples of the base include cesium carbonate, potassium t-butoxide, butyllithium, and sodium hydride.

In the formulae (I) and (II), Ar¹ to Ar⁴ are each independently a substituted or unsubstituted aryl group or a substituted or unsubstituted heteroaryl group.

The aryl groups represented by Ar¹ to Ar⁴ are preferably an aryl group having 6 to 30 carbon atoms, more preferably an aryl group having 6 to 20 carbon atoms, and even more preferably an aryl group having 6 to 12 carbon atoms, and may be an aryl group having 6 carbon atoms. Examples of the aryl groups include a phenyl group and a naphthyl group.

Examples of a substituent that the aryl groups may have include a halogen atom (F, Cl, Br, and I), an alkyl group having 1 to 6 carbon atoms, an alkoxy group having 1 to 6 carbon atoms, a hydroxy group, and a substituted or unsubstituted heteroaryl group having 3 to 30 ring carbon atoms.

The alkyl group having 1 to 6 carbon atoms of the substituent may be an alkyl group having 1 to 4 carbon atoms or an alkyl group having 1 to 3 carbon atoms. Examples of the alkyl group include a methyl group, an ethyl group, a n-propyl group, an isopropyl group, a n-butyl group, an isobutyl group, a t-butyl group, a n-pentyl group, and an isopentyl group.

The alkoxy group having 1 to 6 carbon atoms of the substituent may be an alkoxy group having 1 to 4 carbon atoms or an alkoxy group having 1 to 3 carbon atoms. Examples of the alkoxy group include a methoxy group, an ethoxy group, a n-propoxy group, an isopropoxy group, a n-butoxy group, an isobutoxy group, a t-butoxy group, a n-pentyloxy group, and an isopentyloxy group.

The heteroaryl group having 3 to 30 ring carbon atoms of the substituent may be a heteroaryl group having 3 to 20 ring carbon atoms, a heteroaryl group having 5 to 15 ring carbon atoms, or a heteroaryl group having 10 to 15 ring carbon atoms. Examples thereof include a pyridyl group, a thiophenyl group, a furanyl group, a thiazolyl group, a dibenzofuranyl group, a dibenzothiophenyl group, a 9-carbazolyl group, a 1-carbazolyl group, a 2-carbazolyl group, a 3-carbazolyl group, and a 4-carbazolyl group. The heteroaryl group may have a substituent. Examples of the substituent include a halogen atom (F, Cl, Br, and I), an alkyl group having 1 to 6 carbon atoms, an alkoxy group having 1 to 6 carbon atoms, and a hydroxy group. The heteroaryl group having 3 to 30 ring carbon atoms of the substituent is preferably a substituted or unsubstituted 9-carbazolyl group.

The aryl groups represented by Ar¹ to Ar⁴ are not particularly limited, but are preferably an aryl group in which the substituted or unsubstituted heteroaryl group having 3 to 30 ring carbon atoms is substituted. Preferred aspects of the aryl groups are as described above.

The heteroaryl groups represented by Ar¹ to Ar⁴ are preferably a substituted or unsubstituted heteroaryl group having 3 to 30 ring carbon atoms, and are described similarly to the heteroaryl group having 3 to 30 ring carbon atoms of the substituent, and preferred aspects thereof are also the same.

In the formulae (I) and (II), B is a cross-linking group having 1 to 50 atoms (provided that the number of hydrogen atoms is excluded), and the number of the atoms (provided that the number of hydrogen atoms is excluded) is preferably 1 to 30, more preferably 1 to 10, even more preferably 1 to 8, and particularly preferably 3 to 6. Examples of the cross-linking group include a substituted or unsubstituted hydrocarbon group, and a substituted or unsubstituted hydrocarbon group having a heteroatom. Among these, a substituted or unsubstituted hydrocarbon group is preferred.

Examples of the hydrocarbon group include an alkylene group having 1 to 10 carbon atoms, an alkenylene group having 2 to 10 carbon atoms, an alkynylene group having 2 to 10 carbon atoms, an arylene group having 6 to 20 ring carbon atoms, a heteroarylene group having 3 to 20 ring carbon atoms, and a group obtained by combining these groups.

The alkylene group having 1 to 10 carbon atoms is preferably an alkylene group having 1 to 7 carbon atoms, more preferably an alkylene group having 1 to 5 carbon atoms, and even more preferably an alkylene group having 3 to 5 carbon atoms. Examples of the alkylene group include a methylene group, an ethylene group, a trimethylene group, a 1-methyltrimethylene group, a 1,3-dimethyltrimethylene group, a tetramethylene group, a pentamethylene group, a hexamethylene group, an octamethylene group, and a decamethylene group. Among these, a methylene group, an ethylene group, a trimethylene group, a 1-methyltrimethylene group, a 1,3-dimethyltrimethylene group, a tetramethylene group, and a pentamethylene group are preferred, a trimethylene group, a 1-methyltrimethylene group, a 1,3-dimethyltrimethylene group, and a tetramethylene group are more preferred, and a 1,3-dimethyltrimethylene group is further preferred.

The alkenylene group having 2 to 10 carbon atoms is preferably an alkenylene group having 2 to 7 carbon atoms, and more preferably an alkenylene group having 2 to 5 carbon atoms. Examples of the alkenylene group include a vinylene group, a 1-propene-1,3-diyl group, a 2-propene-1,3-diyl group, a 1-hexene-1,4-diyl group, a 2-pentene-1,5-diyl group, a 1-octene-1,8-diyl group, a 1,6-octadiene-1,8-diyl group, and a 2,6-octadiene-1,8-diyl group.

The alkynylene group having 2 to 10 carbon atoms is preferably an alkynylene group having 2 to 7 carbon atoms, and more preferably an alkynylene group having 2 to 5 carbon atoms. Examples of the alkynylene group include an acetylenediyl group, a 1-propyne-1,3-diyl group, a 1-butyne-1,3-diyl group, a 1-hexyne-1,4-diyl group, a 2-pentyne-1,5-diyl group, and a 1-octyne-1,8-diyl group.

The arylene group having 6 to 20 ring carbon atoms is preferably an arylene group having 6 to 12 ring carbon atoms, more preferably an arylene group having 6 to 10 ring carbon atoms, and even more preferably an arylene group having 6 ring carbon atoms. Examples of the arylene group include a 1,2-phenylene group, a 1,3-phenylene group, a biphenyl-2,2'-diyl group, and a 1,4-phenylene group.

The heteroarylene group having 3 to 20 ring carbon atoms is preferably a heteroarylene group having 3 to 15 ring carbon atoms, and more preferably a heteroarylene group having 5 to 15 ring carbon atoms. Examples of the heteroarylene group include a 2.6-pyridyl group, a xanthenediyl group and the following divalent group. 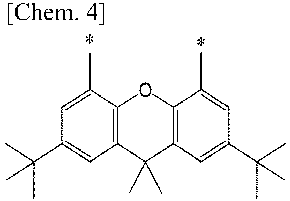
* represents a binding site.

Examples of the "group obtained by combining these groups" include a group obtained by combining an alkylene group having 1 to 10 carbon atoms and an arylene group having 6 to 20 ring carbon atoms, a group obtained by combining an alkylene group having 1 to 10 carbon atoms and a heteroarylene group having 3 to 20 ring carbon atoms, a group obtained by combining an alkenylene group having 2 to 10 carbon atoms and an arylene group having 6 to 20 ring carbon atoms, a group obtained by combining an alkynylene group having 2 to 10 carbon atoms and an arylene group having 6 to 20 ring carbon atoms, a group obtained by combining an alkenylene group having 2 to 10 carbon atoms and a heteroarylene group having 3 to 20 ring carbon atoms, a group obtained by combining an alkynylene group having 2 to 10 carbon atoms and a heteroarylene group having 3 to 20 ring carbon atoms, and a group obtained by combining an arylene group having 6 to 20 carbon atoms and a heteroarylene group having 3 to 20 ring carbon atoms. Among these, a group obtained by combining an alkylene group having 1 to 10 carbon atoms and an arylene group having 6 to 20 ring carbon atoms, and a group obtained by combining an alkylene group having 1 to 10 carbon atoms and a heteroarylene group having 3 to 20 ring carbon atoms are preferred.

Examples of the group obtained by combining an alkylene group having 1 to 10 carbon atoms and an arylene group having 6 to 20 ring carbon atoms include the following divalent groups. 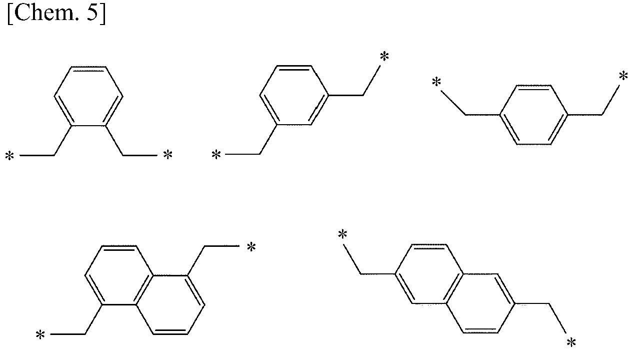
* represents a binding site.

The group obtained by combining an alkylene group having 1 to 10 carbon atoms and an arylene group having 6 to 20 ring carbon atoms is preferably the following divalent groups. 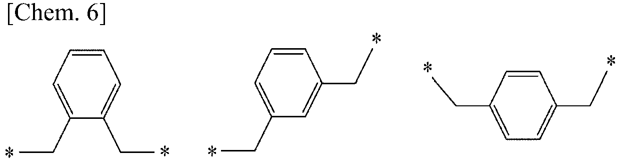
* represents a binding site.

Examples of the group obtained by combining an alkylene group having 1 to 10 carbon atoms and a heteroarylene group having 3 to 20 ring carbon atoms include the following divalent groups. 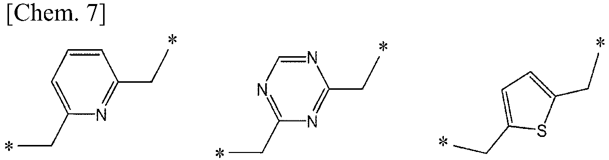
* represents a binding site.

The hydrocarbon group may have a substituent. For example, the alkylene group having 1 to 10 carbon atoms may have a substituent such as a halogen atom (F, Cl, Br, or I) or a hydroxy group without particular limitation. The arylene group having 6 to 20 ring carbon atoms may be substituted by a halogen atom (F, Cl, Br, or I), a hydroxy group, or an alkyl group having 1 to 10 carbon atoms without particular limitation. The heteroarylene group having 3 to 20 ring carbon atoms may be substituted by a halogen atom (F, Cl, Br, or I), a hydroxy group, or an alkyl group having 1 to 10 carbon atoms without particular limitation.

Examples of the substituted or unsubstituted hydrocarbon group having the heteroatom include those in which part of the "substituted or unsubstituted hydrocarbon group" is replaced by a heteroatom. Examples of the heteroatom include an oxygen atom, a nitrogen atom, and a sulfur atom.

The substituted or unsubstituted alkoxy groups represented by X" and X‴ may be an alkoxy group having 1 to 6 carbon atoms, an alkoxy group having 1 to 4 carbon atoms, or an alkoxy group having 1 to 3 carbon atoms. Examples of the alkoxy group include a methoxy group, an ethoxy group, a n-propoxy group, an isopropoxy group, a n-butoxy group, an isobutoxy group, a t-butoxy group, a n-pentyloxy group, and an isopentyloxy group.

Examples of a substituent that the alkoxy groups may have include a halogen atom (F, Cl, Br, and I) and a hydroxy group.

The substituted or unsubstituted aryloxy groups represented by X" and X‴ may be an aryloxy group having 6 to 30 ring carbon atoms, an aryloxy group having 6 to 20 ring carbon atoms, or an aryloxy group having 6 to 12 ring carbon atoms. Examples of the aryloxy groups include a phenoxy group, a naphthyloxy group, and a biphenylyloxy group.

Examples of a substituent that the aryloxy groups may have include a halogen atom (F, Cl, Br, and I), an alkyl group having 1 to 6 carbon atoms, an alkoxy group having 1 to 6 carbon atoms, and a hydroxy group.

The substituted or unsubstituted aralkyloxy groups represented by X" and X‴ may be an aralkyloxy group having 6 to 30 ring carbon atoms, an aralkyloxy group having 6 to 20 ring carbon atoms, an aralkyloxy group having 6 to 12 ring carbon atoms, or an aralkyloxy group having 6 ring carbon atoms. Examples of the aralkyloxy groups include a benzyloxy group.

Examples of a substituent that the aralkyloxy groups may have include a halogen atom (F, Cl, Br, and I), an alkyl group having 1 to 6 carbon atoms, an alkoxy group having 1 to 6 carbon atoms, and a hydroxy group.

Examples of the substituted or unsubstituted alkoxy groups represented by Y and Y' are the same as the examples of the substituted or unsubstituted alkoxy groups represented by X" and X"', and preferred aspects thereof are the same.

Examples of the substituted or unsubstituted aryloxy groups represented by Y and Y' are the same as the examples of the substituted or unsubstituted aryloxy groups represented by X" and X‴, and preferred aspects thereof are the same.

Examples of the substituted or unsubstituted aralkyloxy groups represented by Y and Y' are the same as the examples of the substituted or unsubstituted aralkyloxy groups represented by X" and X"', and preferred aspects thereof are the same.

Y and Y' are preferably a hydroxy group.

The ligand (1) is preferably a ligand represented by the formula (I).

In addition, a preferred aspect of the ligand (1) is that the ligand (1) has the following structure.

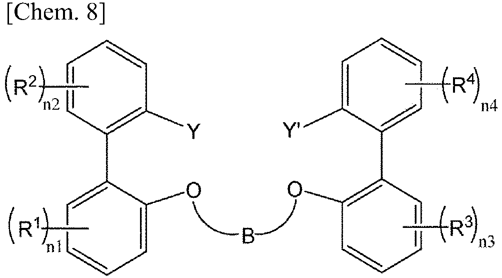

In the formula, B, Y, and Y' are as defined above; R¹ to R⁴ are each independently a substituent selected from an alkyl group, an alkenyl group, an alkynyl group, an aryl group, a heteroaryl group, and a group obtained by combining these groups; and n1 to n4 are each independently an integer of 1 to 4.

The alkyl groups represented by R¹ to R⁴ are not particularly limited, but may be an alkyl group having 1 to 6 carbon atoms, an alkyl group having 1 to 4 carbon atoms, or an alkyl group having 1 to 3 carbon atoms. Examples of the alkyl group include a methyl group, an ethyl group, a n-propyl group, an isopropyl group, a n-butyl group, an isobutyl group, a t-butyl group, a n-pentyl group, and an isopentyl group.

The alkenyl groups represented by R¹ to R⁴ are not particularly limited, but may be an alkenyl group having 2 to 10 carbon atoms, an alkenyl group having 2 to 7 carbon atoms, or an alkenyl group having 2 to 5 carbon atoms. Examples of the alkenyl groups include a vinyl group, a 1-propenyl group, an allyl group, a 1-hexenyl group, a 2-pentenyl group, a 1-octenyl group, a 1,6-octadienyl group, and a 2,6-octadienyl group.

The alkynyl group represented by R¹ to R⁴ are not particularly limited, but may be an alkynyl group having 2 to 10 carbon atoms, an alkynyl group having 2 to 7 carbon atoms, or an alkynyl group having 2 to 5 carbon atoms. Examples of the alkynyl groups include an ethynyl group, a 1-propynyl group, a propargyl group; a 1-butynyl group, a 1-hexynyl group, a 2-pentynyl group, and a 1-octynyl group.

The aryl groups represented by R¹ to R⁴ are not particularly limited, but may be an aryl group having 6 to 30 carbon atoms, an aryl group having 6 to 20 carbon atoms, an aryl group having 6 to 12 carbon atoms, or an aryl group having 6 carbon atoms. Examples of the aryl groups include a phenyl group and a naphthyl group.

The heteroaryl groups represented by R¹ to R⁴ are not particularly limited, but may be a heteroaryl group having 3 to 20 ring carbon atoms, a heteroaryl group having 5 to 15 ring carbon atoms, or a heteroaryl group having 10 to 15 ring carbon atoms. Examples thereof include a pyridyl group, a thiophenyl group, a furanyl group, a thiazolyl group, a dibenzofuranyl group, a dibenzothiophenyl group, a 9-carbazolyl group, a 1-carbazolyl group, a 2-carbazolyl group, a 3-carbazolyl group, and a 4-carbazolyl group.

Examples of the "groups obtained by combining these groups" represented by R¹ to R⁴ include a group obtained by combining an alkyl group and an aryl group, such as an alkylaryl group or an aralkyl group; a group obtained by combining an alkenyl group and an aryl group, such as an alkenylaryl group; a group obtained by combining an alkynyl group and an aryl group, such as an alkynylaryl group; a group obtained by combining an alkyl group and a heteroaryl group, such as an alkylheteroaryl group or a heteroarylalkyl group; a group obtained by combining an alkenyl group and a heteroaryl group, such as an alkenylheteroaryl group; a group obtained by combining an alkynyl group and a heteroaryl group, such as an alkynylheteroaryl group; and a group obtained by combining an aryl group and a heteroaryl group, such as a heteroaryl-aryl group.

The alkyl groups, the alkenyl groups, the alkynyl groups, the aryl groups, the heteroaryl groups, and the groups obtained by combining these groups, represented by R¹ to R⁴, are unsubstituted.

R¹ to R⁴ are not particularly limited, but are preferably the alkyl groups and the heteroaryl groups.

n1 to n4 are each independently an integer of 1 to 4, preferably an integer of 1 to 3, and more preferably 1 or 2.

Specific examples of the ligand (1) include, but not particularly limited to, the following.

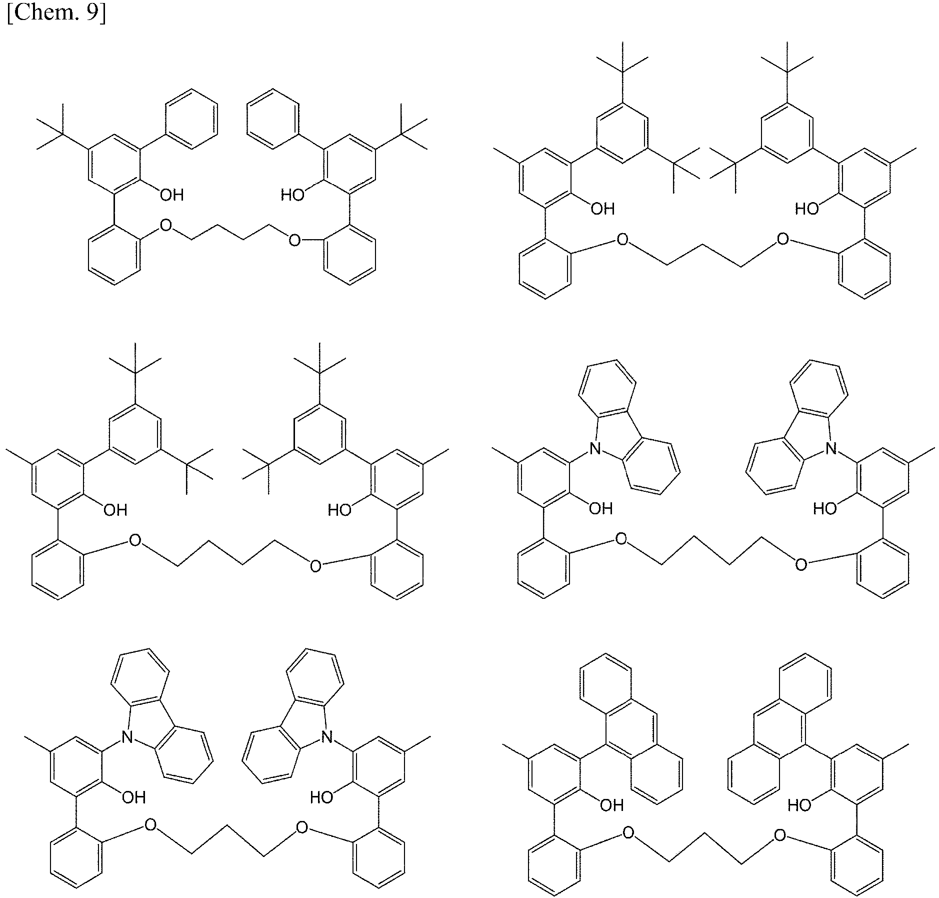

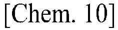

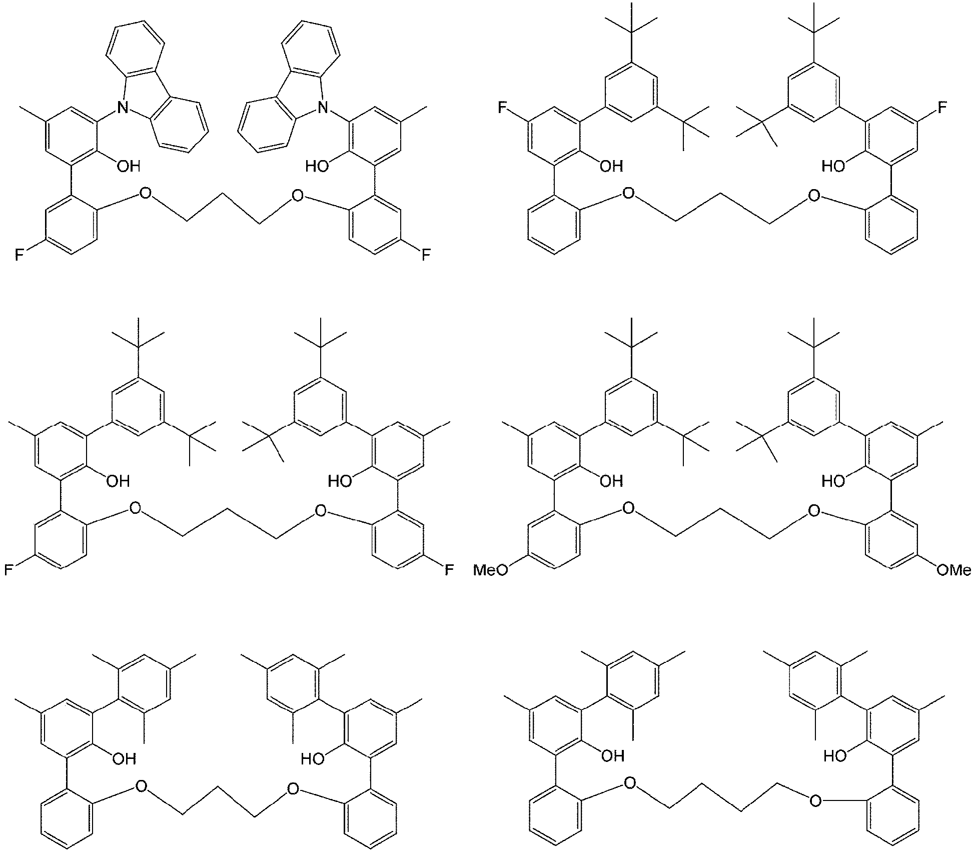

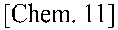

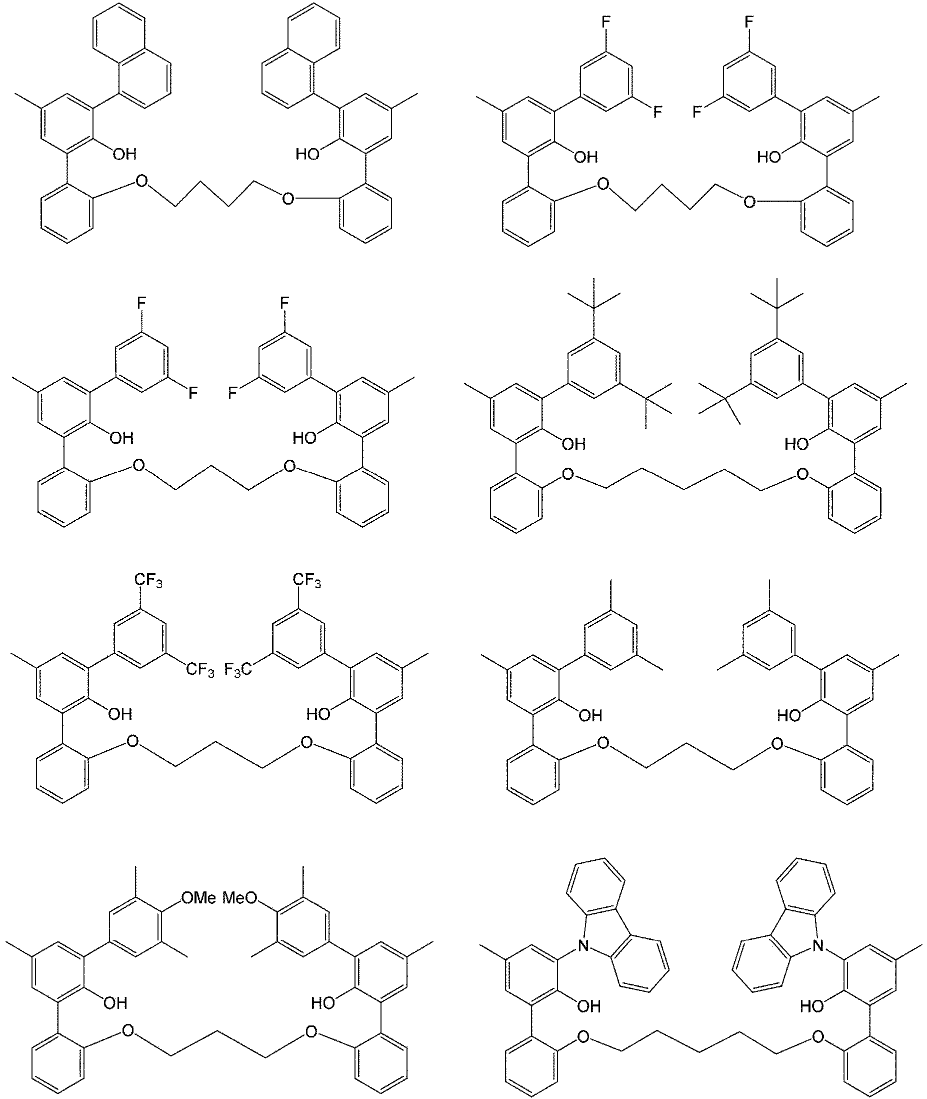

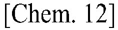

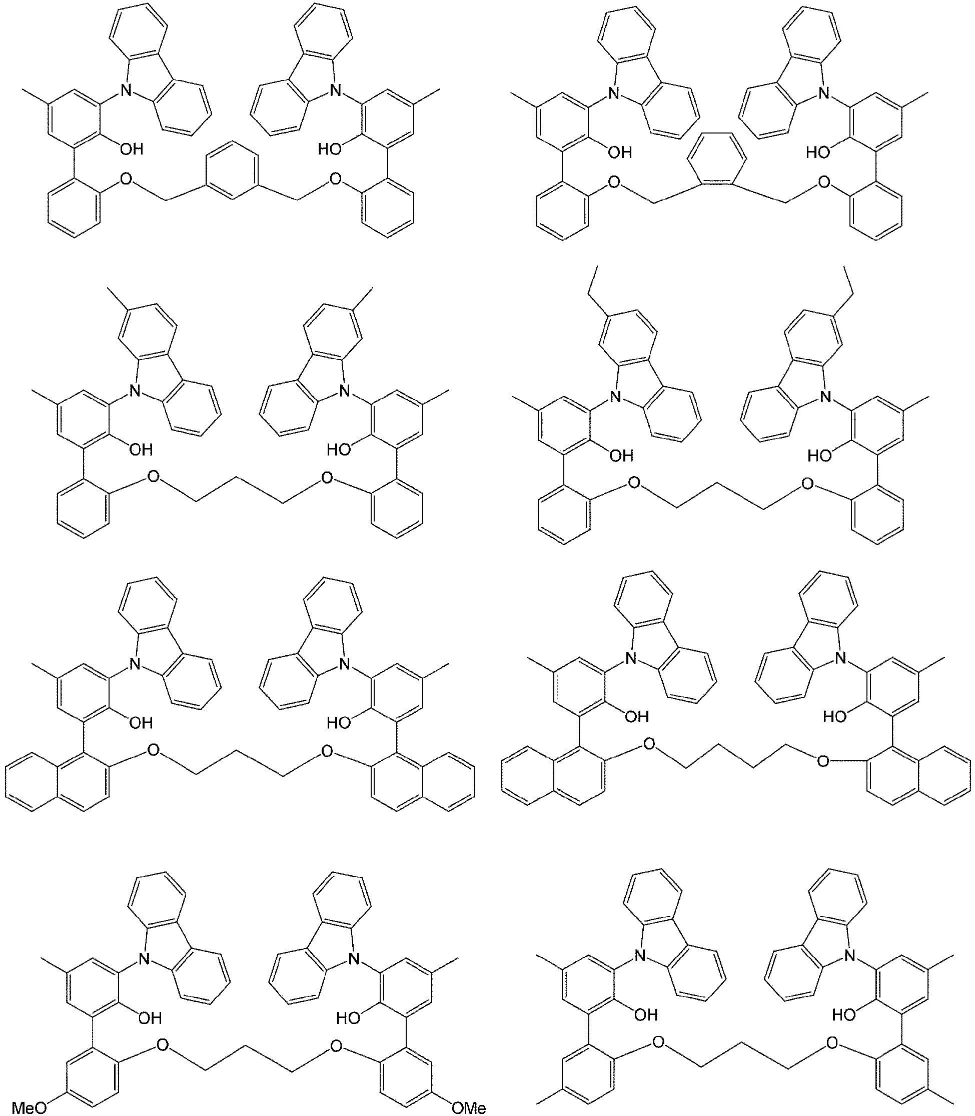

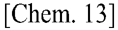

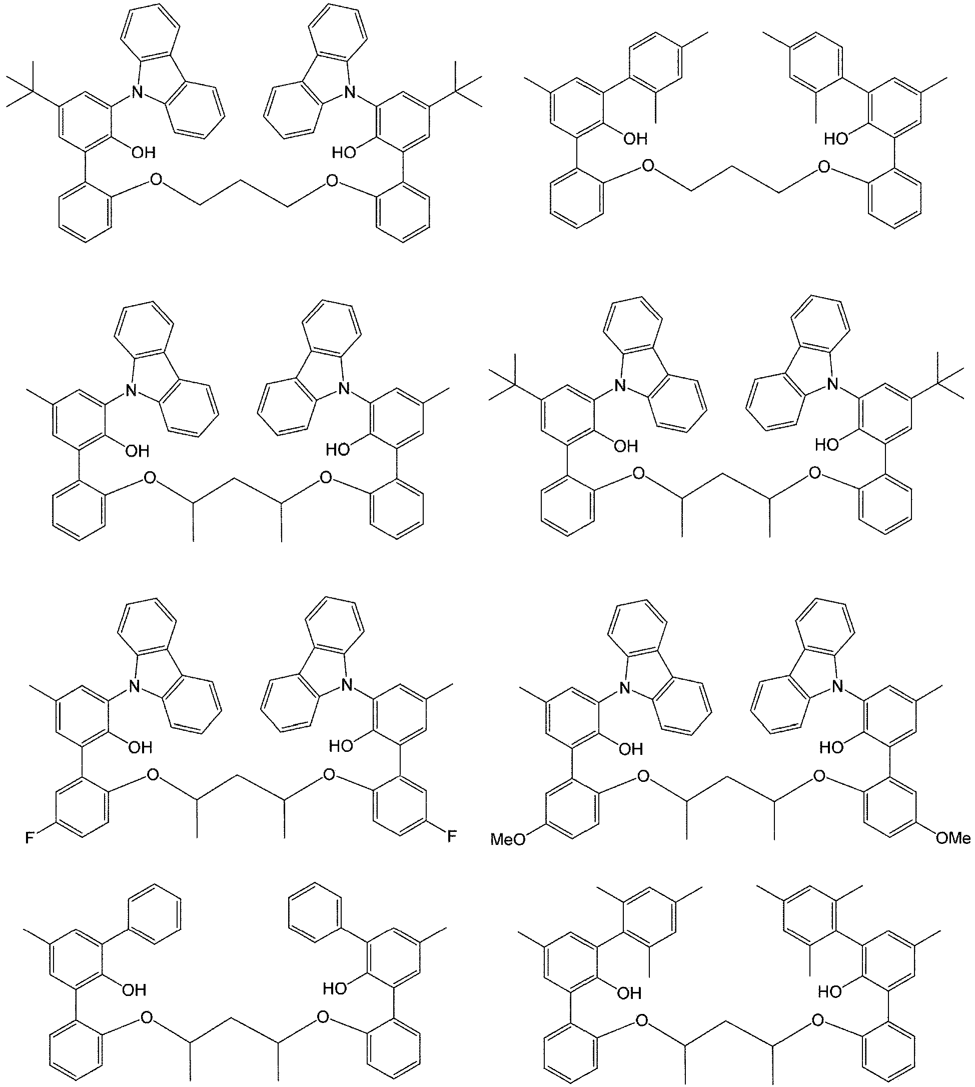

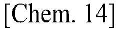

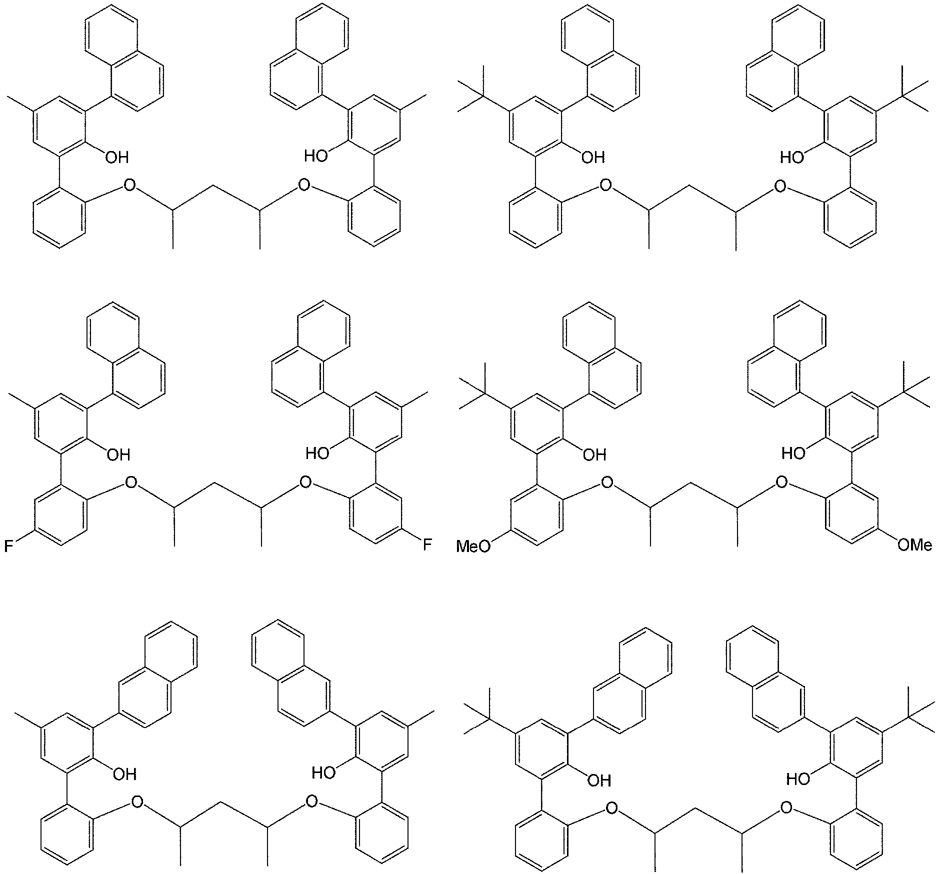

The ligand (1) is not particularly limited, but is preferably a ligand having the following structure.

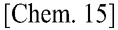

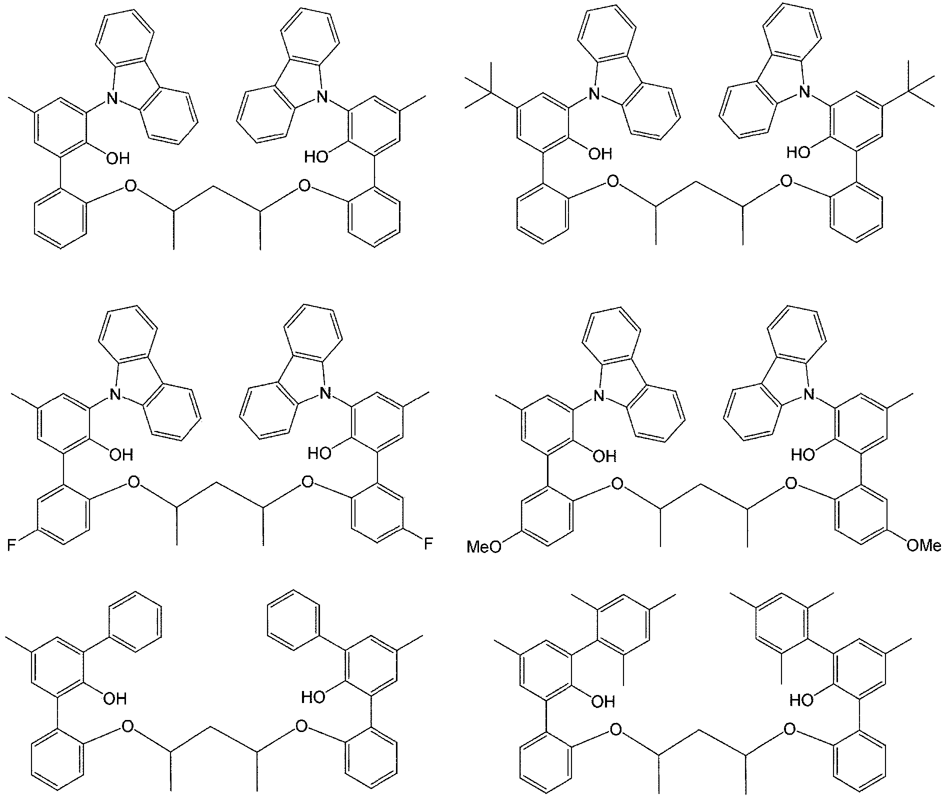

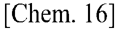

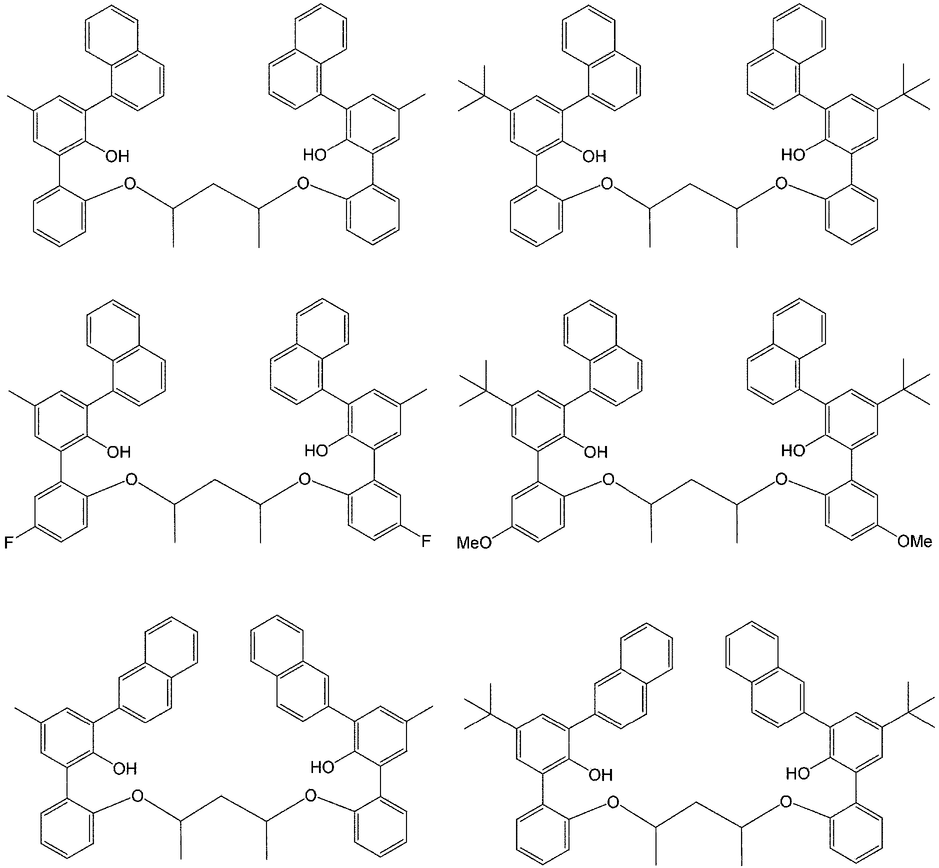

### (Metal Compound (2))

The metal compound (2) is represented by Formula M(L)ₙ as described above. The M is titanium, hafnium, or zirconium, preferably hafnium, zirconium, and more preferably hafnium from the viewpoint of the melting point and melting enthalpy of the 3-methyl-1-butene-based polymer to be obtained and from the viewpoint of catalytic activity.

In the metal compound (2), the L is a component forming a covalent bond, a dative bond, or an ionic bond with the M. The L may be ionically bonded to the M. For example, the L is an uncoordinated anion, a loosely coordinated anion, or a weakly coordinated anion (e.g., the L can be selected from the group consisting of anions described below about activator), and for details of weak interactions thereof, see Marks et al., Chem. Rev. 2000, 100, pp. 1391-1434. Examples of the L include a halogen atom (F, Cl, Br, and I), an alkyl group having 1 to 6 carbon atoms, an alkenyl group having 2 to 6 carbon atoms, an alkynyl group having 2 to 6 carbon atoms, a heteroalkyl group having 1 to 6 carbon atoms, a heteroalkenyl group having 2 to 6 carbon atoms, a heteroalkynyl group having 2 to 6 carbon atoms, an aryl group having 6 to 20 ring carbon atoms, a heteroaryl group having 3 to 20 ring carbon atoms, an alkoxy group having 1 to 6 carbon atoms, an aryloxy group having 6 to 20 ring carbon atoms, a substituted silyl group (trimethylsilyl group), a boryl group, a phosphino group, an amino group, a thioxy group, an alkylthio group, an arylthio group, a hydride group, an allyl group, diene, phosphine, carboxylate, 1,3-dionate, oxalate, carbonate, nitrate, sulfate, ether, thioether, and combinations thereof.

In the metal compound (2), n is an integer of 2 to 6, or may be 3 to 5 or 4.

Specific examples of the metal compound (2) include TiCl₄, Ti(CH₂Ph)₄, Ti(CH₂CMe₃)₄, Ti(CH₂SiMe₃)₄, Ti(CH₂Ph)₃Cl, Ti(CH₂CMe₃)₃Cl, Ti(CH₂SiMe₃)₃Cl, Ti(CH₂Ph)₂Cl₂, Ti(CH₂CMe₃)₂Cl₂, Ti(CH₂SiMe₃)₂Cl₂, Ti(NMe₂)₄, Ti(NEt₂)₄, Ti(OⁱPr)₄, Ti(N(SiMe₃)₂)₂Cl₂; HfCl₄, Hf(CH₂Ph)₄, Hf(CH₂CMe₃)₄, Hf(CH₂SiMe₃)₄, Hf(CH₂Ph)₃Cl, Hf(CH₂CMe₃)₃Cl, Hf(CH₂SiMe₃)₃Cl, Hf(CH₂Ph)₂Cl₂, Hf(CH₂CMe₃)₂Cl₂, Hf(CH₂SiMe₃)₂Cl₂, Hf(NMe₂)₄, Hf(NEt₂)₄, Hf(N(SiMe₃)₂)₂Cl₂; ZrCl₄, Zr(CH₂Ph)₄, Zr(CH₂CMe₃)₄, Zr(CH₂SiMe₃)₄, Zr(CH₂Ph)₃Cl, Zr(CH₂CMe₃)₃Cl, Zr(CH₂SiMe₃)₃Cl, Zr(CH₂Ph)₂Cl₂, Zr(CH₂CMe₃)₂Cl₂, Zr(CH₂SiMe₃)₂Cl₂, Zr(NMe₂)₄, Zr(NEt₂)₄, Zr(NMe₂)₂Cl₂, Zr(NEt₂)₂Cl₂, and Zr(N(SiMe₃)₂)₂Cl₂.

The metal compound (2) is also preferably a Lewis base adduct of the specific examples. For example, ether, amine, thioether, phosphine, or the like is appropriate for the Lewis base. That is, preferred examples of the metal compound (2) include HfCl₄(THF)₂, HfCl₄(SMe₂)₂, and Hf(CH₂Ph)₂Cl₂(OEt₂).

The metal compound (2) may be an ionic compound or a zwitterionic compound. Examples of the ionic compound and the zwitterionic compound include (M(CH₂Ph)₃⁺)(B(C₆F₅)₄⁻) and (M(CH₂Ph)₃⁺)(PhCH₂B(C₆Fs)₃⁻) (M is as described above).

In an aspect of the method for producing a 3-methyl-1-butene-based polymer of the present embodiment, 3-methyl-1-butene is polymerized alone or 3-methyl-1-butene and an α-olefin are copolymerized in the presence of a catalyst formed from a composition containing the ligand (1) and the metal compound (2).

In the composition, the content ratio (ligand (1)/metal compound (2)) of the ligand (1) to the metal compound (2) is not particularly limited, but the content ratio by mole is preferably 0.01/1 to 100/1, more preferably 0.1/1 to 10/1, and even more preferably 0.5/1 to 2/1.

The composition containing the ligand (1) and the metal compound (2) is stirred in an organic solvent, preferably in an organic solvent at 10 to 80°C, the organic solvent is removed in an atmosphere of inert gas such as argon gas or nitrogen gas, to be concentrated, and as a result a catalyst is obtained. The organic solvent is not particularly limited, and examples thereof include saturated hydrocarbons such as pentane, cyclopentane, hexane, cyclohexane, heptane, isoheptane, and isooctane; and aromatic hydrocarbons such as benzene and toluene. One kind of the organic solvents may be used alone, or two or more kinds thereof may be used in combination.

With regard to the catalyst and a method for producing the same, JP 2005-523921 T can be seen.

Specific examples of the catalyst formed from the composition containing the ligand (1) and the metal compound (2) include, but not particularly limited to, the following.

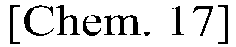

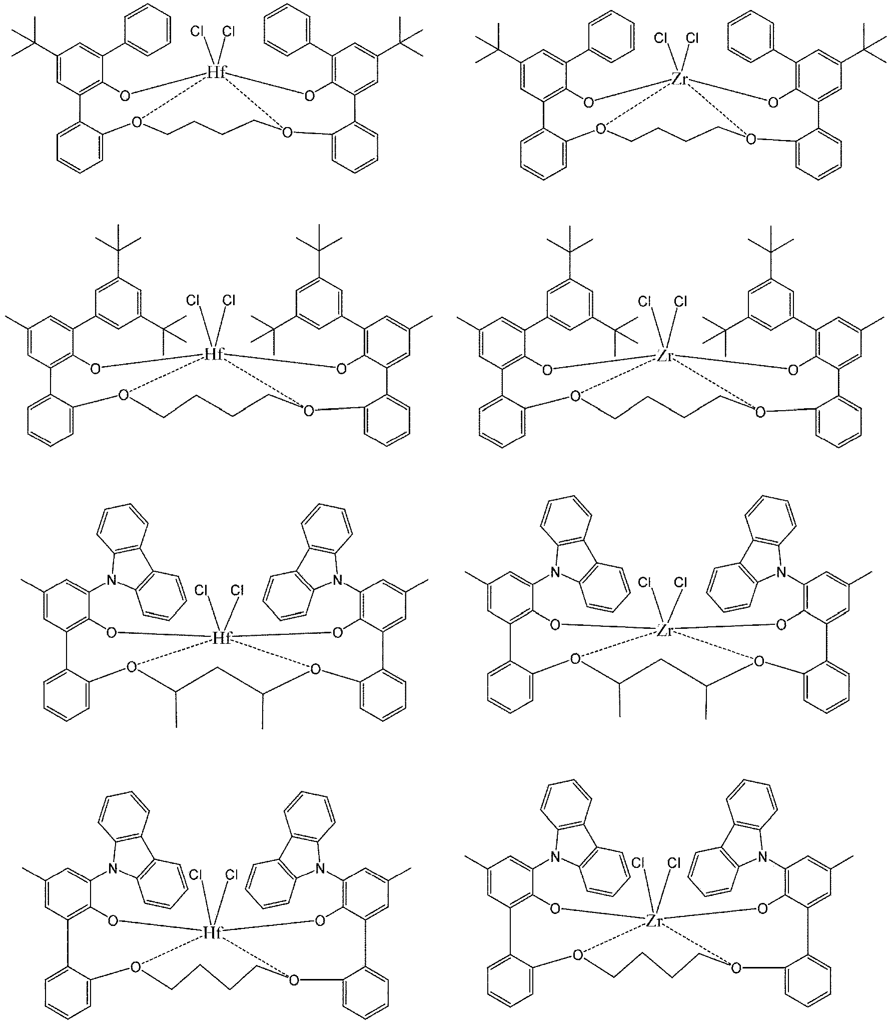

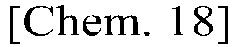

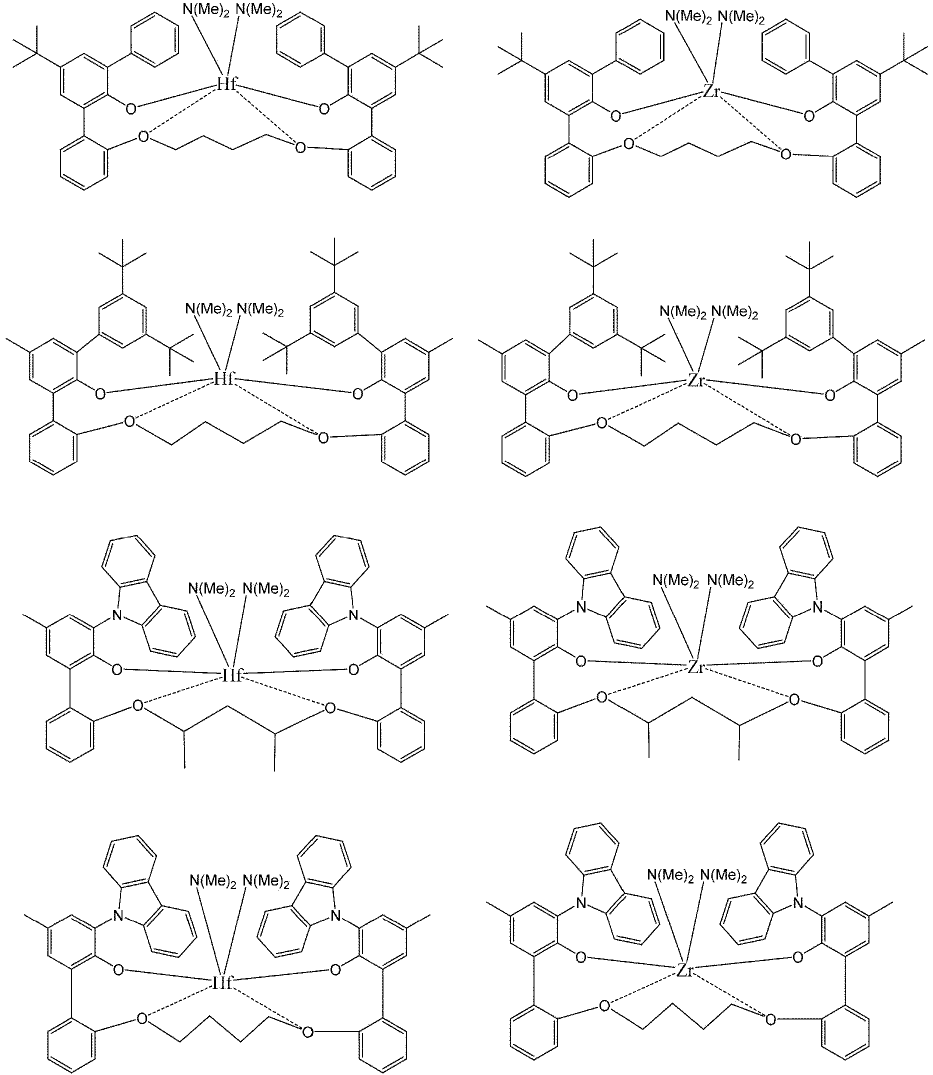

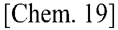

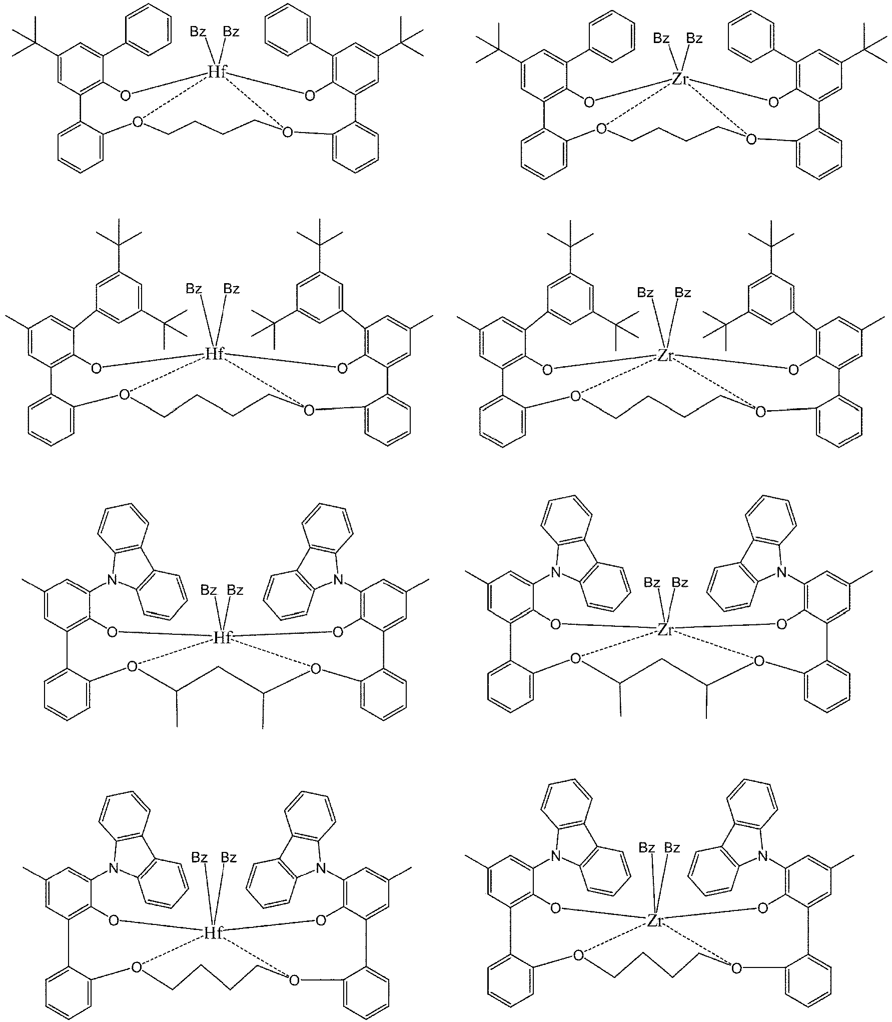

### (Activating Agent (3))

It is preferable that the polymerization or copolymerization (hereinafter collectively referred to as polymerization) be further performed in the presence of an activating agent (3).

A general activating agent (also referred to as promoter or cocatalyst) used in polymerization of an α-olefin can be used as the activating agent (3).

The activating agent (3) is not particularly limited, and examples thereof include a boron compound, methylaluminoxane (MAO), modified methylaluminoxane (MMAO), and boron compound-organoaluminum.

The boron compound is not particularly limited, and examples thereof include a trisubstituted ammonium salt, dialkylammonium salt, a trisubstituted phosphonium salt, and a trisubstituted methylium salt.

Examples of the trisubstituted ammonium salt include trimethylammonium tetraphenylborate, triethylammonium tetraphenylborate, N,N-diethylanilinium tetraphenylborate, and trimethylammonium tetrakis(pentafluorophenyl)borate.

Examples of the dialkylammonium salt include di(isopropyl)ammonium tetrakis(pentafluorophenyl)borate and dicyclohexylammonium tetrakis(pentafluorophenyl)borate.

Examples of the trisubstituted phosphonium salt include triphenylphosphonium tetrakis(pentafluorophenyl)borate, tri(o-tolyl)phosphonium tetrakis(pentafluorophenyl)borate, and tri(2,6-dimethylphenyl)hosphonium tetrakis(pentafluorophenyl)borate.

Examples of the trisubstituted methylium salt include trityl tetrakis(pentafluorophenyl)borate, tri(o-tolyl)methylium tetrakis(pentafluorophenyl)borate, and tri(2,6-dimethylphenyl)methylium tetrakis(pentafluorophenyl)borate.

As the methylaluminoxane (MAO) or the modified methylaluminoxane (MMAO), publicly known MAO or MMAO used in polymerization of an α-olefin can be used. In order to adjust the activity of MAO or MMAO, a hindered phenol-based compound such as 2,6-di-tert-butyl-p-cresol (BHT) may be used in combination with MAO or MMAO.

Examples of an organoaluminum in the boron compound-organoaluminum include trialkylaluminum such as trimethylaluminum, triethylaluminum, triisopropylaluminum, triisobutylaluminum, and trioctylaluminum; alkenyl aluminum such as isoprenyl aluminum; dialkylaluminum halide such as dimethylaluminum chloride and diethylaluminum chloride; alkylaluminum sesquihalide such as methylaluminum sesquichloride, isopropylaluminum sesquichloride, and butylaluminum sesquichloride; alkylaluminum dihalide such as methylaluminum dichloride, isopropylaluminum dichloride, and ethylaluminum dibromide; and alkylaluminum hydride such as diethylaluminum hydride and diisobutylaluminum hydride.

The organoaluminum may be a hydrated polymer.

The boron compound-organoaluminum is not particularly limited, and examples thereof include trityl tetrakis(pentafluorophenyl)borate-triisobutylaluminum.

The activating agent (3) is not particularly limited, but MAO and the boron compound-trialkylaluminum are preferred.

The polymerization is usually performed in an organic solvent. Examples of the organic solvent include saturated hydrocarbons such as pentane, cyclopentane, hexane, cyclohexane, heptane, isoheptane, and isooctane; and aromatic hydrocarbons such as benzene and toluene. The organic solvent is not particularly limited, but from the viewpoint of the solubility of the α-olefin and the catalyst, an aromatic hydrocarbon such as toluene is preferred. One kind of the organic solvents may be used alone, or two or more kinds thereof may be used in combination.

For the polymerization, the concentration of the catalyst in the solution is not particularly limited, but from the viewpoint of reaction efficiency, it is preferably 0.0001 to 0.1 mol/L, more preferably 0.001 to 0.05 mol/L, and even more preferably 0.001 to 0.01 mol/L.

For the polymerization, the concentration of the activating agent (3) in the solution is not particularly limited, but from the viewpoint of reaction efficiency, it is preferably 0.001 to 1.0 mol/L, more preferably 0.01 to 0.5 mol/L, and even more preferably 0.05 to 0.3 mol/L.

### <Polymerization Conditions>

The polymerization can be performed by any method of a batchwise method, a semi-continuous method, or a continuous method. In addition, the polymerization can be performed in two or more stages under different reaction conditions.

The polymerization temperature is preferably 10 to 180°C, more preferably 30 to 160°C, and even more preferably 50 to 160°C. When the polymerization temperature is within the aforementioned range, the advance of the polymerization can be promoted while the catalytic activity is kept satisfactory, and productivity is improved. In particular, when the M is not zirconium (Zr), for example, is hafnium (Hf), a 3-methyl-1-butene-based polymer having a predetermined melting enthalpy can be easily obtained at the aforementioned temperature range. Meanwhile, when the M is zirconium (Zr), the polymerization temperature is preferably 10 to 145°C, more preferably 30 to 140°C, even more preferably 50 to 140°C, and particularly preferably 50 to 135°C from the viewpoint of obtaining the 3-methyl-1-butene-based polymer having a predetermined melting enthalpy.

### (Polymerization Pressure)

The polymerization pressure is preferably normal pressure to 5 MPa (gauge pressure), and more preferably 0.05 to 4 MPa (gauge pressure). When the polymerization pressure is within the aforementioned range, a device such as a high-pressure-resistant reactor or a vacuum pump is not required, and this is economically advantageous.

### (Polymerization Time)

The polymerization time may be 1 minute to 10 hours, 3 minutes to 5 hours, or 3 minutes to 3 hours. When the polymerization time is within the aforementioned range, a reduction in physical properties of a polymer caused by thermal degradation is less prone to occur, and a polymer having satisfactory physical properties is easily produced.

### (Termination of Polymerization)

The polymerization may be terminated by removing a monomer through distillation or filtration, or terminated by adding any polymerization terminator as required. The polymerization terminator is preferably a compound to react with a catalyst containing a compound having a transition metal atom of Group 4 in the periodic table. Examples of the polymerization terminator include compounds having an active proton such as water, an alcohol, a primary amine, a secondary amine, a thiol, or Bronsted acid; an ether, phosphine, a tertiary amine, a thioether, carbon dioxide, and oxygen molecules.

One kind of the polymerization terminators may be used alone, or two or more kinds thereof may be used in combination.

### (Removal of Catalyst Component)

In the method for producing a 3-methyl-1-butene-based polymer of the present embodiment, after the termination of the polymerization reaction, an operation of removing the catalyst component contained in the produced polymer may be performed. A method for removing the catalyst component is not particularly limited, and a publicly known method can be adopted. Examples of the method include (A) a method in which an alcohol such as isobutanol or 2-propanol is added to a crude 3-methyl-1-butene-based polymer obtained by the polymerization, the mixture is stirred at a temperature of about 10 to 100°C, and the 3-methyl-1-butene-based polymer is separated; and (B) a method in which an alcohol such as isobutanol or 2-propanol and a mineral acid such as hydrochloric acid or a nitric acid are added to a crude 3-methyl-1-butene-based polymer obtained by the polymerization, the mixture is treated at a temperature of about 10 to 100°C, and the 3-methyl-1-butene-based polymer is separated.

The operation of removing the catalyst component may be performed for a polymer slurry immediately after the termination of the polymerization reaction or may be performed after the unreacted monomer and the reaction solvent are removed from the polymer slurry by distillation or filtration.

The 3-methyl-1-butene-based polymer obtained above may be subjected to a drying step.

The drying step is not particularly limited, and a publicly known method may be adopted. The drying step may be performed, for example, by removing a volatile component under conditions of 133 Pa to normal pressure and 20 to 200°C. During the drying, the 3-methyl-1-butene-based polymer may be allowed to stand, may be allowed to flow under application of air or inert gas, or may be allowed to flow by a mechanical procedure such as a stirring rotary blade-type drying device, a rotary drying device, a continuous stage-type drying device, or a stream-type drying device.

The drying step may be performed at a different temperature in many separate stages. In the case of heating, the drying step may be referred to as thermal annealing treatment.

In the drying step, the 3-methyl-1-butene-based polymer of the present embodiment is not be melted.

The 3-methyl-1-butene-based polymer of the embodiment may or may not be subjected to melting treatment. Even when the 3-methyl-1-butene-based polymer of the embodiment is not subjected to melting treatment, the 3-methyl-1-butene-based polymer has high crystallinity (degree of crystallinity). When the 3-methyl-1-butene-based polymer is subjected to melting treatment, the 3-methyl-1-butene-based polymer has further high crystallinity (degree of crystallinity).

In the melting treatment, at least part of the 3-methyl-1-butene-based polymer has only to be melted, 50 mass% or more of the 3-methyl-1-butene-based polymer is preferably melted, 80 mass% or more of the 3-methyl-1-butene-based polymer is more preferably melted, 90 mass% or more of the 3-methyl-1-butene-based polymer is even more preferably melted, and 100 mass% of the 3-methyl-1-butene-based polymer is particularly preferably melted.

The melting treatment is performed at a temperature of preferably the melting point of the 3-methyl-1-butene-based polymer of the present embodiment to 380°C, more preferably the melting point to 350°C, and even more preferably the melting point to 320°C. The retention time after the 3-methyl-1-butene-based polymer starts to be melted is not particularly limited, but is preferably 1 to 30 minutes, more preferably 1 to 15 minutes, and even more preferably 1 to 10 minutes.

A temperature-rising condition during the melting treatment is not particularly limited. Until the 3-methyl-1-butene-based polymer is melted, the temperature rises at a rate of preferably 3 to 15°C/min, more preferably 5 to 15°C/min, and even more preferably 10°C/min.

After the melting treatment, the 3-methyl-1-butene-based polymer is solidified again by cooling. The temperature at the time of cooling is not particularly limited as long as it is less than the melting point of the 3-methyl-1-butene-based polymer of the present embodiment, but is preferably 250°C or less, more preferably -30 to 100°C, and even more preferably -20 to 40°C.

The temperature-falling conditions at the time of cooling is not particularly limited, but the temperature falls at a rate of preferably 3 to 15°C/min, more preferably 5 to 15°C/min, and even more preferably 10°C/min.

An aspect of the present embodiment is the following 3-methyl-1-butene-based polymers, but is not particularly limited to these polymers:
(X) a 3-methyl-1-butene-based polymer not subjected to melting treatment, the polymer having a degree of crystallinity, determined by the following method, of 80 to 100% (hereinafter sometimes referred to as 3-methyl-1-butene-based polymer (X)); and
(Y) a 3-methyl-1-butene-based polymer subjected to melting treatment, the polymer having a degree of crystallinity, determined by the following method, of 95 to 100% (hereinafter sometimes referred to as 3-methyl-1-butene-based polymer (Y)).

### (Method for calculating degree of crystallinity)

A maximum peak intensity and an amorphous peak intensity are obtained from a profile obtained by an X-ray diffraction method, and the degree of crystallinity is calculated from the following formula; and herein, the maximum peak intensity is an intensity of a peak at a diffraction angle 2θ of a peak top of 17.2 to 17.3°, and the amorphous peak intensity is an intensity of a gap between a peak at a diffraction angle 2θ of a peak top of 10.1 to 10.3° and a peak at a diffraction angle 2θ of a peak top of 11.4 to 11.6°.

The X-ray diffraction method has only to be in conformity with JIS K 0131 (1996), and particularly comply with a method described in Examples. Degree of crystallinity (%) = 100(maximum peak intensity - amorphous peak intensity)/maximum peak intensity

### (3-Methyl-1-butene-based Polymer (X))

The 3-methyl-1-butene-based polymer (X) is a 3-methyl-1-butene-based polymer not subjected to melting treatment as described above, but the polymer has a degree of crystallinity of 80 to 100% and exhibits extremely high crystallinity. This means that the crystallinity of the 3-methyl-1-butene-based polymer immediately after the polymerization reaction is high.

When the degree of crystallinity of the 3-methyl-1-butene-based polymer (X) is within the aforementioned range, the 3-methyl-1-butene-based polymer is excellent in mechanical strength, such as rigidity, and solvent resistance of a molded item. From the same viewpoint, the degree of crystallinity of the 3-methyl-1-butene-based polymer (X) is preferably 85 to 100%, more preferably 55 to 75%, even more preferably 88 to 100%, particularly preferably 89 to 100%, and most preferably 91 to 100%. The upper limit value of the degree of crystallinity of the 3-methyl-1-butene-based polymer (X) may be 99% or less, 96% or less, or 94% or less.

### (3-Methyl-1-butene-based Polymer (Y))

The 3-methyl-1-butene-based polymer (Y) is a 3-methyl-1-butene-based polymer subjected to melting treatment as described above, tends to have a higher degree of crystallinity than the 3-methyl-1-butene-based polymer (X), and has a degree of crystallinity of 95 to 100%. When the degree of crystallinity of the 3-methyl-1-butene-based polymer (Y) is within the aforementioned range, the 3-methyl-1-butene-based polymer is excellent in mechanical strength, such as rigidity, and solvent resistance of a molded item. From the same viewpoint, the degree of crystallinity of the 3-methyl-1-butene-based polymer (Y) is preferably 96 to 100%, more preferably 97 to 100%, even more preferably 98 to 100%, and particularly preferably 99 to 100%. The upper limit value of the degree of crystallinity of the 3-methyl-1-butene-based polymer (Y) may be 99% or less, 98% or less, 97% or less, or 96% or less.

### [Resin Composition Containing 3-Methyl-1-butene-based Polymer]

An aspect of the present embodiment is a resin composition containing the 3-methyl-1-butene-based polymer of the present embodiment. The resin composition of the present embodiment can also be expected to improve the mechanical intensity of a molded item and exhibit a high melting point and high heat resistance due to the high crystallinity of the 3-methyl-1-butene-based polymer of the present embodiment.

In addition to the 3-methyl-1-butene-based polymer of the present embodiment, the resin composition of the present embodiment may contain an additive such as an antioxidant, an alkyl radical scavenger, an antacid, a filler, a light stabilizer, an antistatic agent, a flame retardant, a pigment, a polymerization inhibitor, a heavy metal deactivator, an ultraviolet absorber, a nucleating agent, a clarifying agent, a lubricant, a fluorescent brightener, or a rust inhibitor; a variety of additional polymer; or another component as required.

One kind of these components may be used alone, or two or more kinds thereof may be used in combination.

The resin composition of the present embodiment can be produced by melt-kneading the 3-methyl-1-butene-based polymer and the other component as required with a publicly known mixer preferably at 280 to 380°C. Examples of the mixer include a single-screw extruder, a twin-screw extruder, a kneader, a Banbury mixer, and a roll.

### [Pellet Containing 3-Methyl-1-butene-based Polymer and Pellet Containing Resin Composition]

An aspect of the present embodiment is a pellet containing the 3-methyl-1-butene-based polymer of the present embodiment or a pellet containing the resin composition of the present embodiment.

The pellet of the present embodiment can be obtained by cutting with a cutter or the like the resin composition of the present embodiment obtained as a discharged material from the mixer by melt-kneading.

The pellet of the present embodiment can also be expected to improve the mechanical intensity of a molded item and exhibit a high melting point and high heat resistance due to the high crystallinity of the 3-methyl-1-butene-based polymer of the present embodiment.

### [Molded Item Containing 3-Methyl-1-butene-based Polymer and Molded Item Containing Resin Composition]

An aspect of the present embodiment is a molded item containing the 3-methyl-1-butene-based polymer of the present embodiment or a molded item containing the resin composition of the present embodiment. The molded item of the present embodiment is obtained by molding the resin composition of the present embodiment.

The shape of the molded item of the present embodiment is not particularly limited, and examples thereof include a film, a sheet, a plate, a pipe, a tube, a rod, and a granule. The pellet may also be included in the concept of the molded item.

A method for producing the molded item of the present embodiment is not particularly limited, and various conventional molding methods may be adopted. For example, a method for forming a thin film by injection-molding, blow-molding, press-molding, extrusion-molding, calendar-molding, or spraying powder, or the like may be adopted.

The molded item of the present embodiment can also be expected to improve the mechanical intensity of a molded item and exhibit a high melting point and high heat resistance due to the high crystallinity of the 3-methyl-1-butene-based polymer of the present embodiment.

The applications of the 3-methyl-1-butene-based polymer, the resin composition, and the molded item of the present embodiment are not particularly limited, and examples thereof include a paint, a substrate material of a cupper-clad laminated plate, an insulating film for film capacitor, an insulating film for motor coil, an insulator for motor coil, a connector for electric device, fibers, a power supply socket casing for electric vehicle (EV), a millimeter-wave antenna casing, kitchenware such as chopsticks, a dish, and a rice spoon, a consumer electronics casing, chemical solution-resistant piping and container, and coating materials of fibers or the molded item.

### Examples

Hereinafter, the present invention will be specifically described with reference to Examples and Comparative Examples, but the present invention is not limited thereto.

### <1> Production of Catalyst

The following catalysts 1 and 2 were produced as catalysts used in Examples.

In addition, the following comparative catalysts 3 to 6 were produced as catalysts used in Comparative Examples.

Catalyst 1: a complex having the following structure was produced with reference to WO 2005/108406, which was catalyst 1.

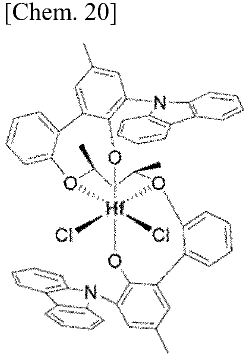

Catalyst 2: a complex having the following structure was produced with reference to WO 2005/108406, which was catalyst 2.

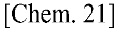

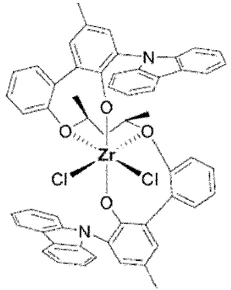

Comparative catalyst 3: a metallocene complex having the following structure was produced with reference to EP 834514 A, which was comparative catalyst 3.

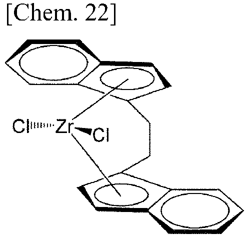

Comparative catalyst 4: a metallocene complex having the following structure was produced with reference to EP 669340 A, which was comparative catalyst 4.

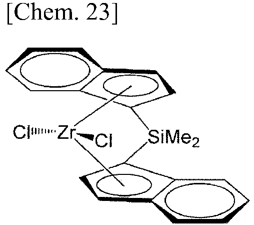

Comparative catalyst 5: a metallocene complex having the following structure was produced with reference to Journal of the American Chemical Society (2021), 143(20) , pp. 7641-7647, which was comparative catalyst 5.

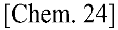

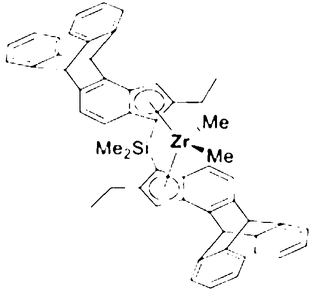

Comparative catalyst 6: a titanium catalyst (solid catalyst) was produced according to the following production method, which was comparative catalyst 6. The comparative catalyst 6 was used in a state of a heptane solution in which the concentration was 4.0 g/L and the content of the comparative catalyst 6 was 500 µL (corresponding to 1.67 µmol in terms of titanium atom).

47.6 g (500 mmol) of anhydrous magnesium chloride, 250 mL of decane, and 234 mL (1.5 mol) of 2-ethylhexyl alcohol were reacted by heating at 130°C for 2 hours to obtain a homogeneous solution. The homogeneous solution thus obtained was cooled to room temperature and then added dropwise over 1 hour to 2 L (18 mol) of titanium tetrachloride kept to -20°C. After the completion of dropwise addition, the temperature of the resultant mixture was raised to 110°C over 2 hours. When the temperature reached 110°C, 42.4 mL (160 mmol) of dibutyl phthalate was added, and the temperature was kept for 2 hours with stirring. After the completion of the reaction, the mixture was allowed to stand, and the supernatant was removed. Decane and hexane were added thereto, the solid component was washed three times and then resuspended in 2 L of titanium tetrachloride, and the mixture was heated again at 110°C for 2 hours. After that, further standing and removal of the supernatant were repeated, and washing was sufficiently performed using decane and hexane until a free titanium compound was not detected in the washing liquid. The resultant suspension component was dried under reduced pressure at room temperature for 6 hours to obtain a titanium catalyst. The composition of the titanium catalyst thus obtained was subjected to inductively coupled plasma (ICP) spectrometry, anion chromatography, and ¹H NMR analysis, and included 4.0 mass% of titanium atom, 56.0 mass% of chlorine atom, 17.0 mass% of magnesium atom, and 11.0 mass% of ethyl benzoate.

### <2> 3-Methyl-1-butene-based Polymer

With regard to 3-methyl-1-butene-based polymers obtained in Examples and Comparative Examples, various physical properties were measured and evaluated by the following methods.

### [Melting Point and Melting Enthalpy]

The 3-methyl-1-butene-based polymer obtained in each of Examples and Comparative Examples was heated from 30°C to 320°C at a rate of 10°C/min (first rise in temperature) under a nitrogen flow rate (100 mL/min) using a differential scanning calorimeter (TA Instruments, "DSC25"), kept at 320°C for 5 minutes, and then cooled to -70°C at a rate of 10°C/min. After the temperature was kept at -70°C for 5 minutes, the temperature was raised to 320°C at a rate of 10°C/min (second rise in temperature), and the melting point and the melting enthalpy were measured.

### [Polymerization Activity]

The polymerization activity was calculated by the following formula. Polymerization activity = (mass (g) of 3-methyl-1-butene-based polymer obtained by polymerization reaction)/(amount by mole (mol) of metal atoms in catalyst added to polymerization reaction system)/(polymerization time (hr))

As the value of polymerization activity is larger, a polymer can be produced at a smaller catalytic amount, which is economically advantageous.

### [Degree of Crystallinity]

With regard to the 3-methyl-1-butene-based polymers obtained in Examples 1 and 4 and Comparative Example 4, the degree of crystallinity was calculated by the following method from results obtained by an X-ray diffraction method with the following device under the following conditions.

### (1. Preparation of Measurement Sample)

### <3-Methyl-1-butene-based Polymer not Subjected to Melting Treatment>

Each of the 3-methyl-1-butene-based polymers obtained in Examples 1 and 4 and Comparative Example 4 was allowed to stand in an environment of a degree of vacuum of 10 mmHg and 200°C for 2 hours, subjected to thermal annealing treatment, and then cooled to 30°C over 4 hours.

10 mg of the measurement sample subjected to the thermal annealing treatment (3-methyl-1-butene-based polymer not subjected to melting treatment) was placed on a measurement pan for measurement preparation.

### <3-Methyl-1-butene-based Polymer Subjected to Melting Treatment>

On the other hand, each of the 3-methyl-1-butene-based polymers obtained in Examples 1 and 4 was heated from 30°C to 320°C at a rate of 10°C/min under a nitrogen flow rate (100 mL/min) using a differential scanning calorimeter "Q2000" (manufactured by TA Instruments) and then kept at 320°C for 5 minutes, to be melted, and then cooled to 30°C at a rate of 10°C/min.

10 mg of the measurement sample subjected to the melting treatment was placed on a measurement pan for measurement preparation.

### (2. Measurement Device and Condition)

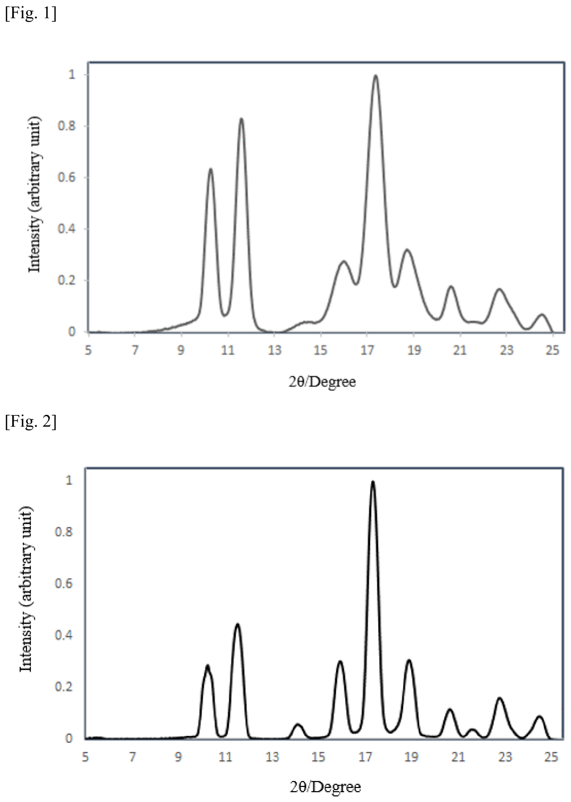

The measurement samples prepared by the aforementioned method were measured by an X-ray diffraction method with the following measurement device under the following measurement conditions to obtain profiles (FIGs. 1 to 6).
Measurement device: NANOPIX (manufactured by Rigaku Corporation)
Measurement method: wide-angle X-ray diffraction method
Detector: 2D semiconductor detector "HyPix-6000"
X-ray source: Cu
Electric current: 30 mA
Electric voltage: 40 kV
Exposure time: 300 seconds
Incident light optics: 2PHF
Measurement mode: superimposing measurement (4 profiles)
Camera length: 87.38 mm
Measurement temperature: 30°C
Beam stopper diameter: 4 mm
Analyzing software for profile conversion of two-dimensional-image: 2DP (manufactured by Rigaku Corporation)
20-INT conversion condition: 2θ = 3 to 36°, β = 0 to 360°, step width = 0.02°

### (3. Method for Calculating Degree of Crystallinity)

The maximum peak intensity and the amorphous peak intensity were obtained from each of the profiles obtained by the X-ray diffraction method with the measurement device, and the degree of crystallinity was calculated from the following formula. Herein, the maximum peak intensity is an intensity of a peak at a diffraction angle 20 of a peak top of 17.2 to 17.3°, and the amorphous peak intensity is an intensity of a gap between a peak at a diffraction angle 2θ of a peak top of 10.1 to 10.3° and a peak at a diffraction angle 20 of a peak top of 11.4 to 11.6°. Degree of crystallinity (%) = 100(maximum peak intensity - amorphous peak intensity)/maximum peak intensity

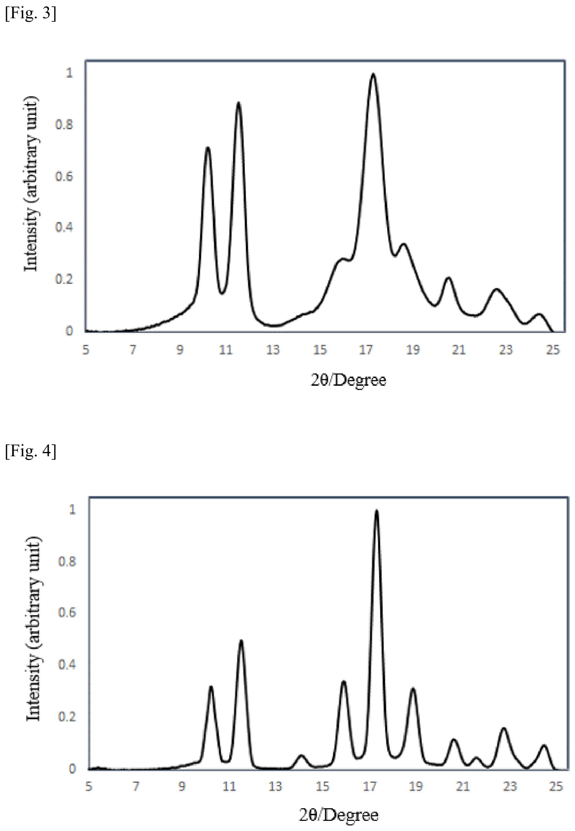

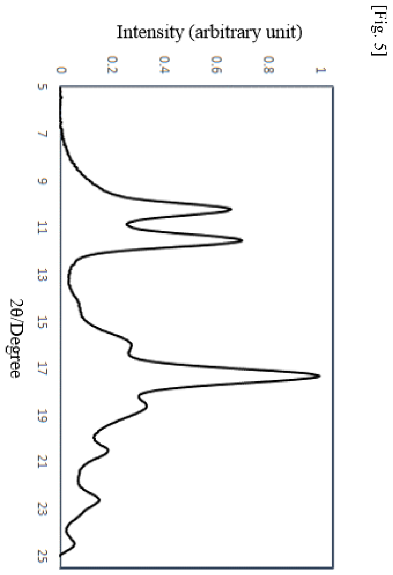

With regard to the 3-methyl-1-butene-based copolymers obtained in Examples 1 and 4 and Comparative Example 4, the profiles of the 3-methyl-1-butene-based copolymers not subjected to melting treatment are shown in FIG. 1 (Example 1), FIG. 3 (Example 4), and FIG. 5 (Comparative Example 4). With regard to the 3-methyl-1-butene-based copolymers obtained in Examples 1 and 4, the profiles of the 3-methyl-1-butene-based copolymers subjected to melting treatment are shown in FIG. 2 (Example 1) and FIG. 4 (Example 4).

### <Production of 3-Methyl-1-butene Copolymer>

### [Example 1]

A 3-methyl-1-butene polymer was produced in PPR48 (PPR: Parallel pressure Reactor) (manufactured by Freeslate) for olefin polymerization. In the PPR48, 48 reactors are set in a triple glove box isolated from the outside. A polymerization procedure is as follows.

3-Methyl-1-butene (3.5 mL), a toluene solution of trityltetrakis(pentafluorophenyl) borate ([Ph₃C][B(C₆F₅)₄], TTB) (concentration: 0.005 mol/L, TTB content: 60 µL (corresponding to 300 nmol)), and a toluene solution of triisobutylaluminum (TIBA) (concentration: 0.1 mol/L, TIBA content: 850 µL (corresponding to 85 µmol)) were sent to one of the reactors by pressure, and kept at 70°C.

After that, a toluene solution of the catalyst 1 (concentration: 0.005 mol/L, catalyst 1 content: 30 µL (corresponding to 150 nmol)) and heptane were sent to the reactors by pressure. The total usage amount of heptane and toluene was 5.0 mL.

3-Methyl-1-butene was polymerized for 120 minutes and quenched under excessive pressure of the reactors by dry air. After the quenching, the reactors were cooled and evacuated. While the volatile component in the resultant reaction solution was distilled off with a centrifugation evaporator Genevac EZ2-Plus, the 3-methyl-1-butene polymer was dried overnight.

This operation was repeated twice. The average mass of the resultant 3-methyl-1-butene polymer was 1.47 g.

The resultant 3-methyl-1-butene polymer was subjected to various measurements by the aforementioned methods. The results are shown in Table 1.

### [Example 2]

A 3-methyl-1-butene polymer was produced in the same manner as in Example 1 except that the polymerization temperature was changed from 70°C to 120°C and the polymerization time was changed from 120 minutes to 30 minutes. The resultant 3-methyl-1-butene polymer was subjected to various measurements by the aforementioned methods. The results are shown in Table 1.

### [Example 3]

A 3-methyl-1-butene polymer was produced in the same manner as in Example 1 except that the polymerization temperature was changed from 70°C to 150°C and the polymerization time was changed from 120 minutes to 5 minutes. The resultant 3-methyl-1-butene polymer was subjected to various measurements by the aforementioned methods. The results are shown in Table 1.

### [Example 4]

A 3-methyl-1-butene polymer was produced in the same manner as in Example 1 except that the activating agent (3) was changed from TTB and TIBA to a toluene solution of methylaluminoxane (MAO) (concentration: 0.2 mol/L, MAO content: 550 µL (corresponding to 110 µmol)) and a toluene solution of 2,6-di-tert-butyl-p-cresol (BHT) (concentration: 0.1 mol/L, BHT content: 450 µL (corresponding to 45 µmol)). The resultant 3-methyl-1-butene polymer was subjected to various measurements by the aforementioned methods. The results are shown in Table 1.

### [Example 5]

A 3-methyl-1-butene polymer was produced in the same manner as in Example 2 except that the catalyst was changed from the catalyst 1 to the catalyst 2 and the polymerization time was changed from 30 minutes to 10 minutes. The resultant 3-methyl-1-butene polymer was subjected to various measurements by the aforementioned methods. The results are shown in Table 1.

### [Example 6]

A 3-methyl-1-butene polymer was produced in the same manner as in Example 5 except that the polymerization temperature was changed from 120°C to 135°C. The resultant 3-methyl-1-butene polymer was subjected to various measurements by the aforementioned methods. The results are shown in Table 1.

### [Comparative Example 1]

A 3-methyl-1-butene polymer was produced in the same manner as in Example 1 except that the catalyst was changed from the catalyst 1 to the comparative catalyst 3. The resultant 3-methyl-1-butene polymer was subjected to various measurements by the aforementioned methods. The results are shown in Table 1.

### [Comparative Example 2]

A 3-methyl-1-butene polymer was produced in the same manner as in Example 1 except that the catalyst was changed from the catalyst 1 to the comparative catalyst 4. The resultant 3-methyl-1-butene polymer was subjected to various measurements by the aforementioned methods. The results are shown in Table 1.

### [Comparative Example 3]

A 3-methyl-1-butene polymer was produced in the same manner as in Example 1 except that the catalyst was changed from the catalyst 1 to the comparative catalyst 5. The resultant 3-methyl-1-butene polymer was subjected to various measurements by the aforementioned methods. The results are shown in Table 1.

### [Comparative Example 4]

A 3-methyl-1-butene polymer was produced in the same manner as in Example 1 except that the catalyst was changed from the catalyst 1 to the comparative catalyst 6 and the activating agent was changed from TTB and TIBA to a heptane solution of triethylaluminum (TEA) (concentration: 0.1 mol/L, TEA content: 600 µL (corresponding to 60 µmol)). The resultant 3-methyl-1-butene polymer was subjected to various measurements by the aforementioned methods. The results are shown in Table 1.

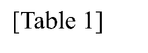

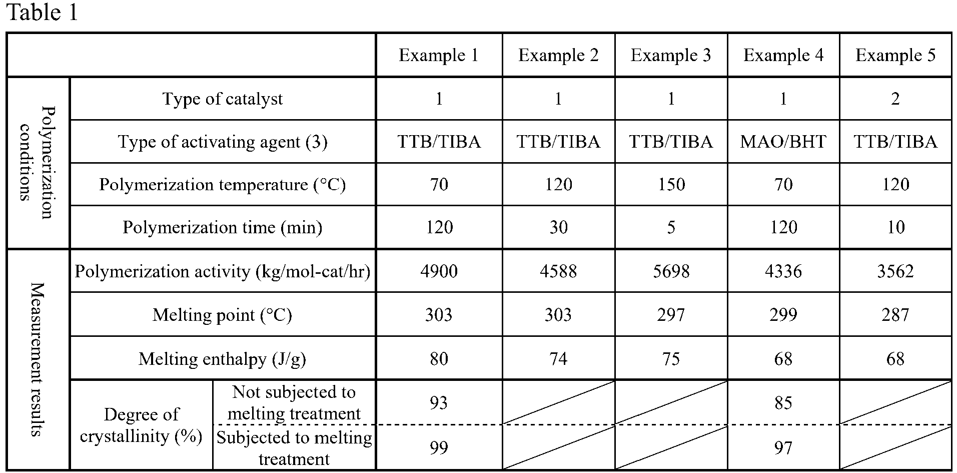

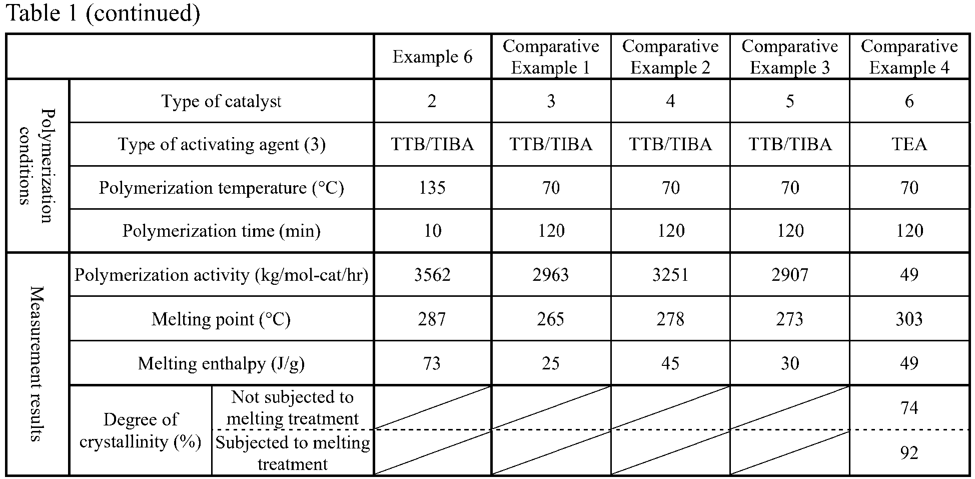

According to Table 1, the 3-methyl-1-butene-based polymers having a melting enthalpy of 65 to 100 J/g were obtained in Examples 1 to 6. The melting enthalpies of the 3-methyl-1-butene-based polymers are high, and therefore the crystallinity is high, and the mechanical intensity of a molded item can be improved.

Meanwhile, a 3-methyl-1-butene-based polymer having a melting enthalpy of 65 to 100 J/g was not obtained in Comparative Examples 1 to 4.

This proved that the crystallinity in Examples 1 and 4 is high than that in Comparative Example 4. In addition, comparison of FIG. 1 with FIG. 2 shows that the peak in FIG. 2 is sharper than the peak in FIG. 1. A sharp peak means high crystallinity. That is, this shows that the 3-methyl-1-butene-based polymer subjected to melting treatment has higher crystallinity than the 3-methyl-1-butene-based polymer not subjected to melting treatment. The same can be applied in comparison of FIG. 3 with FIG. 4.

In the production of the 3-methyl-1-butene-based polymer, the catalyst used in Example 1 has higher polymerization activity than the homogeneous catalyst (metallocene catalyst) used in Comparative Examples 1 to 3 and the solid catalyst used in Comparative Example 4, which is economically advantageous.

## Claims

1. A 3-methyl-1-butene-based polymer, the polymer having a melting enthalpy, determined by differential scanning calorimetry (DSC), of 65 to 100 J/g.

2. The 3-methyl-1-butene-based polymer according to claim 1, wherein a melting point is 280 to 310°C.

3. A 3-methyl-1-butene-based polymer not subjected to melting treatment, the polymer having a degree of crystallinity, determined by the following method, of 80 to 100%:
(Method for calculating degree of crystallinity)
A maximum peak intensity and an amorphous peak intensity are obtained from a profile obtained by an X-ray diffraction method, and the degree of crystallinity is calculated from the following formula; and herein, the maximum peak intensity is an intensity of a peak at a diffraction angle 2θ of a peak top of 17.2 to 17.3°, and the amorphous peak intensity is an intensity of a gap between a peak at a diffraction angle 2θ of a peak top of 10.1 to 10.3° and a peak at a diffraction angle 2θ of a peak top of 11.4 to 11.6°: Degree of crystallinity (%) = 100(maximum peak intensity - amorphous peak intensity)/maximum peak intensity.

4. A 3-methyl-1-butene-based polymer subjected to melting treatment, the polymer having a degree of crystallinity, determined by the following method, of 95 to 100%:
(Method for calculating degree of crystallinity)
A maximum peak intensity and an amorphous peak intensity are obtained from a profile obtained by an X-ray diffraction method, and the degree of crystallinity is calculated from the following formula; and herein, the maximum peak intensity is an intensity of a peak at a diffraction angle 2θ of a peak top of 17.2 to 17.3°, and the amorphous peak intensity is an intensity of a gap between a peak at a diffraction angle 20 of a peak top of 10.1 to 10.3° and a peak at a diffraction angle 2θ of a peak top of 11.4 to 11.6°: Degree of crystallinity (%) = 100(maximum peak intensity - amorphous peak intensity)/maximum peak intensity.

5. The 3-methyl-1-butene-based polymer according to any one of claims 1 to 4, wherein the polymer is a 3-methyl-1-butene homopolymer or a copolymer of 3-methyl-1-butene and ethylene or an α-olefin.

6. The 3-methyl-1-butene-based polymer according to any one of claims 1 to 5, wherein the α-olefin is an α-olefin having 3 to 20 carbon atoms.

7. A resin composition comprising the 3-methyl-1-butene-based polymer according to any one of claims 1 to 6.

8. A pellet comprising the 3-methyl-1-butene-based polymer according to any one of claims 1 to 6 or the resin composition according to claim 7.

9. A molded item comprising the 3-methyl-1-butene-based polymer according to any one of claims 1 to 6 or the resin composition according to claim 7.

10. A method for producing the 3-methyl-1-butene-based polymer according to any one of claims 1 to 6, the method comprising: polymerizing 3-methyl-1-butene alone or copolymerizing 3-methyl-1-butene and ethylene or an α-olefin in the presence of a catalyst formed from a composition containing a ligand (1) represented by the following formula (I) or (II) and a metal compound (2) represented by a formula M(L)ₙ, wherein M is titanium, hafnium, or zirconium; L is a component forming a covalent bond, a dative bond, or an ionic bond with the M; and n is an integer of 2 to 6: 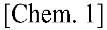 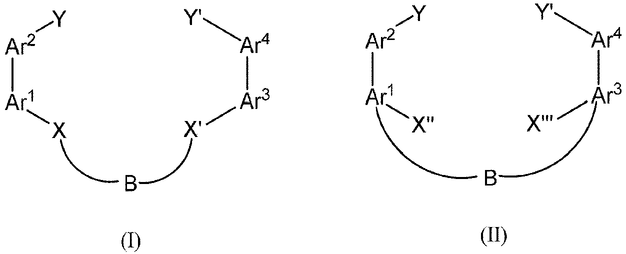 wherein the ligand represented by the formula (I) or (II) has at least two hydrogen atoms to be removed by a binding reaction with a metal atom, the metal compound (2), or a base; Ar¹ to Ar⁴ are each independently a substituted or unsubstituted aryl group or a substituted or unsubstituted heteroaryl group; B is a cross-linking group having 1 to 50 atoms (provided that the number of hydrogen atoms is excluded); all X and X' are an oxygen atom; X" to X‴ are each independently a hydroxy group, a substituted or unsubstituted alkoxy group, or a substituted or unsubstituted aryloxy group; and Y and Y' are each independently a hydroxy group, a substituted or unsubstituted alkoxy group, or a substituted or unsubstituted aryloxy group.

11. The method for producing a 3-methyl-1-butene-based polymer according to claim 10, wherein the ligand (1) has the following structure: 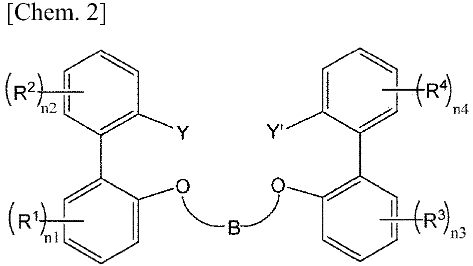 wherein B, Y, and Y' are as defined above; R¹ to R⁴ are each independently a substituent selected from an alkyl group, an aryl group, a heteroaryl group, and a group obtained by combining these groups; and n1 to n4 are each independently an integer of 1 to 4.

12. The method for producing a 3-methyl-1-butene-based polymer according to claim 10 or 11, wherein the polymerizing or copolymerizing is further performed in the presence of an activating agent (3).

13. The method for producing the 3-methyl-1-butene-based polymer according to any one of claims 10 to 12, wherein a polymerization temperature is 10 to 180°C.
